# EUROPEAN PATENT APPLICATION

(11) **EP 4 750 215 A2**
(43) Date of publication of application: **27.05.2026**
(21) Application number: 26162052.0
(22) Date of filing: 26.11.2021
(51) Int. Cl.: H04W 76/11

(54) **COMMUNICATION METHOD AND DEVICE**

(62) Divisional of application: 21965241.9
(71) Applicant: GUANGDONG OPPO MOBILE TELECOMMUNICATIONS CORP., LTD., Dongguan, Guangdong 523860 (CN)
(72) Inventor: ZHOU, Pei, Dongguan, 523860 (CN); HUANG, Lei, 049483 Singapore (SG); LUO, Chaoming, Dongguan, 523860 (CN)
(74) Representative: Mewburn Ellis LLP

(57) **Abstract**

Embodiments of the present disclosure provide communication methods and devices. A method includes that a first device transmits a first information frame, where the first information frame is used for allocating a first measurement setup ID. According to the embodiments of the present disclosure, a solution for a measurement setup ID allocation may be specified.

## Description

### TECHNICAL FIELD

This disclosure relates to the field of communication, and in particularly to communication methods and devices.

### BACKGROUND

A wireless local area network (WLAN) sensing procedure mainly includes one or more of: a sensing session setup, a sensing measurement setup, a sensing measurement instance, a sensing measurement setup termination, or a sensing session termination. However, there is currently no clear solution for a way for performing the sensing measurement setup.

### SUMMARY

Embodiments of the present disclosure provide communication methods and devices. According to the embodiments of the present disclosure, a solution for allocating a measurement setup ID may be specified.

Embodiments of the present disclosure provide a communication method. The method includes that a first device transmits a first information frame, where the first information frame is used for allocating a first measurement setup ID.

Embodiments of the present disclosure further provide a communication method. The method includes that a third device transmits a third information frame, where the third information frame indicates to terminate a sensing measurement setup or to reject to terminate the sensing measurement setup.

Embodiments of the present disclosure further provide a communication method. The method includes that a fifth device receives a fifth information frame from a second station (STA), where the fifth information frame is used for requesting the fifth device to perform a sensing measurement as a proxy of the second STA.

Embodiments of the present disclosure further provide a communication method. The method includes that a second device receives a first information frame, where the first information frame is used for allocating a first measurement setup ID.

Embodiments of the present disclosure further provide a communication method. The method includes that a fourth device receives a third information frame, where the third information frame indicates to terminate a sensing measurement setup or to reject to terminate the sensing measurement setup.

Embodiments of the present disclosure further provide a communication method. The method includes that a second station (STA) transmits a fifth information frame to a fifth device, where the fifth information frame is used for requesting the fifth device to perform a sensing measurement as a proxy of the second STA.

Embodiments of the present disclosure further provide a communication device. The communication device includes a first transmitting module. The first transmitting module is configured to transmit a first information frame, where the first information frame is used for allocating a first measurement setup ID.

Embodiments of the present disclosure further provide a communication device. The communication device includes a second transmitting module. The second transmitting module is configured to transmit a third information frame, where the third information frame indicates to terminate a sensing measurement setup or to reject to terminate the sensing measurement setup.

Embodiments of the present disclosure further provide a communication device. The communication device includes a fifth receiving module. The fifth receiving module is configured to receive a fifth information frame from a second STA, where the fifth information frame is used for requesting the communication device to perform a sensing measurement as a proxy of the second STA.

Embodiments of the present disclosure further provide a communication device. The communication device includes a sixth receiving module. The sixth receiving module is configured to receive a first information frame, where the first information frame is used for allocating a first measurement setup ID.

Embodiments of the present disclosure further provide a communication device. The communication device includes a seventh receiving module. The seventh receiving module is configured to receive a third information frame, where the third information frame indicates to terminate a sensing measurement setup or to reject to terminate the sensing measurement setup.

Embodiments of the present disclosure further provide a communication device. The communication device includes a seventh transmitting module. The seventh transmitting module is configured to transmit a fifth information frame to a fifth device, where the fifth information frame is used for requesting the fifth device to perform a sensing measurement as a proxy of the second STA.

In the embodiments of the present disclosure, the first information frame transmitted by the first device is used for allocating the first measurement setup ID, which provides a clear solution for the measurement setup ID allocation. In addition, the third device transmits the third information frame indicating to terminate the sensing measurement setup or to reject to terminate the sensing measurement setup, which provides a clear solution for terminating the sensing measurement setup.

### BRIEF DESCRIPTION OF THE DRAWINGS

FIG. 1 is a schematic diagram of an application scenario of embodiments of the present disclosure.
FIG. 2 is a flowchart for implementing a communication method 200 according to embodiments of the present disclosure.
FIG. 3A is a schematic diagram of a method for allocating a measurement setup ID according to embodiments of the present disclosure.
FIG. 3B is a schematic diagram of another method for allocating a measurement setup ID according to embodiments of the present disclosure.
FIG. 4A is a schematic diagram of a frame structure of a sensing measurement setup request frame according to embodiments of the present disclosure.
FIG. 4B is a schematic diagram of another frame structure of a sensing measurement setup request frame according to embodiments of the present disclosure.
FIG. 5 is a schematic diagram of a frame structure of a sensing measurement setup response frame according to embodiments of the present disclosure.
FIG. 6A is a schematic diagram of an implementation of a sensing measurement setup according to embodiments of the present disclosure.
FIG. 6B is a schematic diagram of another implementation of a sensing measurement setup according to embodiments of the present disclosure.
FIG. 6C is a schematic diagram of another implementation of a sensing measurement setup according to embodiments of the present disclosure.
FIG. 6D is a schematic diagram of another implementation of a sensing measurement setup according to embodiments of the present disclosure.
FIG. 7 is a schematic structural diagram of a sensing by proxy (SBP) request frame according to embodiments of the present disclosure.
FIG. 8 is a flowchart for implementing a communication method 800 according to embodiments of the present disclosure.
FIG. 9A is a schematic diagram of an implementation of a sensing measurement setup termination according to embodiments of the present disclosure.
FIG. 9B is a schematic diagram of another implementation of a sensing measurement setup termination according to embodiments of the present disclosure.
FIG. 10A is a schematic diagram of another implementation of a sensing measurement setup termination according to embodiments of the present disclosure.
FIG. 10B is a schematic diagram of another implementation of a sensing measurement setup termination according to embodiments of the present disclosure.
FIG. 10C is a schematic diagram of another implementation of a sensing measurement setup termination according to embodiments of the present disclosure.
FIG. 11A is a schematic diagram of a frame structure of a sensing measurement setup termination request frame according to embodiments of the present disclosure.
FIG. 11B is a schematic diagram of another frame structure of a sensing measurement setup termination request frame according to embodiments of the present disclosure.
FIG. 12A is a schematic diagram of a frame structure of a sensing measurement setup termination frame according to embodiments of the present disclosure.
FIG. 12B is a schematic diagram of another frame structure of a sensing measurement setup termination frame according to embodiments of the present disclosure.
FIG. 13 is a flowchart for implementing another communication method 1300 according to embodiments of the present disclosure.
FIG. 14 is a flowchart for implementing another communication method 1400 according to embodiments of the present disclosure.
FIG. 15 is a flowchart for implementing another communication method 1500 according to embodiments of the present disclosure.
FIG. 16 is a flowchart for implementing another communication method 1600 according to embodiments of the present disclosure.
FIG. 17 is a schematic structural diagram of a communication device 1700 according to embodiments of the present disclosure.
FIG. 18 is a schematic structural diagram of a communication device 1800 according to embodiments of the present disclosure.
FIG. 19 is a schematic structural diagram of a communication device 1900 according to embodiments of the present disclosure.
FIG. 20 is a schematic structural diagram of a communication device 2000 according to embodiments of the present disclosure.
FIG. 21 is a schematic structural diagram of a communication device 2100 according to embodiments of the present disclosure.
FIG. 22 is a schematic structural diagram of a communication device 2200 according to embodiments of the present disclosure.
FIG. 23 is a schematic structural diagram of a communication device 2300 according to embodiments of the present disclosure.
FIG. 24 is a schematic structural diagram of a chip 2400 according to embodiments of the present disclosure.

### DETAILED DESCRIPTION

Technical solutions of embodiments of the present disclosure will be described below with reference to accompanying drawings of the embodiments of the present disclosure.

It may be noted that terms "first", "second", or the like in the specification, the claims, and the accompanying drawings of embodiments of the present disclosure are used to distinguish similar objects, and are not necessarily used to describe a particular sequence or order. The objects described by the "first" and the "second" may be the same or different.

The technical solutions of the embodiments of the present disclosure may be applied to various communication systems, for example, a wireless local area network (WLAN), a wireless fidelity (Wi-Fi), or other communication systems, etc.

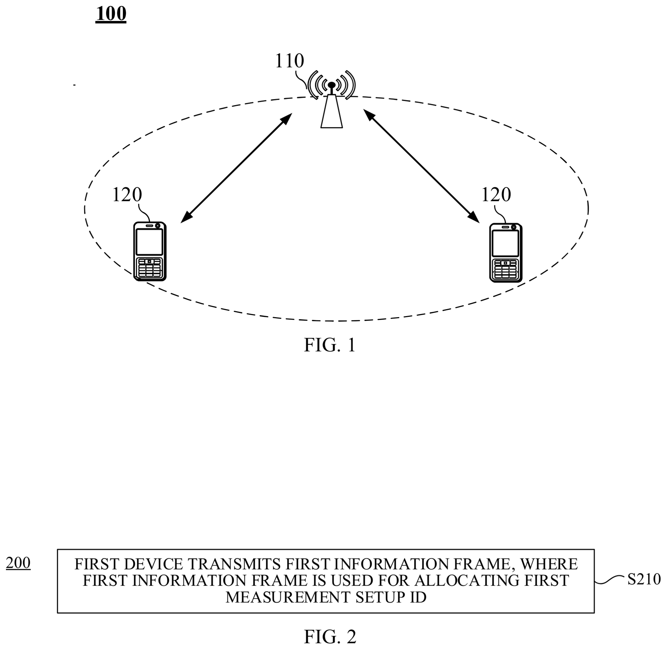

Exemplarily, a communication system 100 that the embodiments of the present disclosure may be applied is illustrated in FIG. 1. The communication system 100 may include an access point (AP) 110 and a station (STA) 120 accessing a network via the AP 110.

In some scenarios, an AP may also be referred to as an AP STA, i.e., the AP may also be an STA in a sensing.

In some scenarios, the STA may also be referred to as a non-AP STA.

The communication system 100 may perform communications between the AP and the non-AP STA, may perform communications between non-AP STAs, or may perform communications between the STA and a peer STA, where the peer STA may refer to a device that is in peer-to-peer communication with the STA. For example, the peer STA may be the AP or the non-AP STA.

The AP is equivalent to a bridge that connects a wired network and a wireless network. A main function of the AP is to connect wireless network clients together and then connect the wireless network to Ethernet. An AP device may be a terminal device (e.g., a mobile phone) or a network device (e.g., a router) with a Wi-Fi chip.

It may be understood that a role of the STA in the communication system may not be absolute. For example, in some scenarios, when a mobile phone is connected to the router, the mobile phone is the non-AP STA. When the mobile phone provides a hot spot for another mobile phone, the mobile phone serves as the AP.

AP and non-AP STA may be devices applied in the Internet of Vehicles (IOV); Internet of Things (IoT) nodes, sensors, or the like in the IoT; smart cameras, smart remote control, smart water meters and electricity meters, or the like in smart home; sensors in smart city; or the like.

In some embodiments, the non-AP STA may support 802.11be standards. The non-AP STA may also support multiple current and future 802.11 WLAN standards, such as 802.11ax, 802.11ac, 802.11n, 802.11g, 802.11b, 802.11a, etc.

In some embodiments, the AP may be a device that supports the 802.11be standards. The AP may also be a device that supports multiple current and future 802.11 WLAN standards, such as 802.11ax, 802.11ac, 802.11n, 802.11g, 802.11b, 802.11a, etc.

In the embodiments of the present disclosure, the STA may be a mobile phone, a pad, a computer that support a WLAN/Wi-Fi technology, a virtual reality (VR) device, an augmented reality (AR) device, a wireless device in industrial control, a set top box (STB), a wireless device in self-driving, a vehicle-mounted communication device, a wireless device in remote medical, a wireless device in smart grid, a wireless device in transportation safety, a wireless device in smart city, a wireless device in smart home, a wireless communication chip, an application-specific integrated circuit (ASIC), a system on chip (SOC), or the like.

Frequency bands that the WLAN technology may support includes, but is not limited to, low-frequency bands (such as 2.4GHz, 5GHz, or 6GHz) and high-frequency bands (such as 60GHz).

FIG. 1 exemplarily illustrates one AP STA and two non-AP STAs. In some implementations, the communication system 100 may include multiple AP STAs and other quantities of non-AP STAs, which will not be limited in embodiments of the present disclosure.

It may be understood that terms "system" and "network" herein are usually used interchangeably throughout this disclosure. The term "and/or" herein only describes an association relationship between associated objects, which means that there may be three relationships. For example, *A* and/or *B* can mean *A* alone, both *A* and *B* exist, and *B* alone. In addition, the character "/" herein generally indicates that the associated objects are in an "or" relationship.

It may be understood that "indication" referred to in embodiments of the present disclosure may be a direct indication, may be an indirect indication, or may mean that there is an association relationship. For example, *A* indicates *B* may mean that *A* directly indicates *B,* for instance, *B* may be obtained according to *A*; may mean that *A* indirectly indicates *B,* for instance, *A* indicates *C*, and *B* may be obtained according to *C*; or may mean that there is an association relationship between *A* and *B.*

In the elaboration of embodiments of the present disclosure, the term "correspondence" may mean that there is a direct or indirect correspondence between the two, may mean that there is an association between the two, or may mean a relationship of indicating and indicated or configuring and configured, etc.

For a better understanding of the technical solutions of the embodiments of the present disclosure, the technical solutions related to the embodiments of the present disclosure will be elaborated below. The following related art as an optional scheme may be arbitrarily combined with the technical solutions of the embodiments of the present disclosure, which shall all belong to the protection scope of embodiments of the present disclosure.

A sensing initiator can initiate a WLAN sensing procedure. The WLAN sensing procedure mainly includes one or more of: a sensing session setup, a sensing measurement setup, a sensing measurement instance, a sensing measurement setup termination, or a sensing session termination.

A sensing session is established between one sensing initiator and one sensing responder, i.e., without considering point-to-point (P2P) sensing, a sensing session is established between an AP and one STA. A specific sensing session is identified with a medium access control (MAC) address and/or an association identifier (AID)/unassociation identifier (UID).

Multiple sensing measurement instances may be established between one sensing initiator and one sensing responder, and each sensing measurement instance may be identified with a measurement setup ID.

For a sensing measurement setup and termination mechanism, in embodiments of the present disclosure, different ways of changing a role of the sensing initiator and a role of the sensing responder are proposed, and ways of initiating the sensing measurement setup termination by different roles are proposed.

Embodiments of the present disclosure propose a communication method. FIG. 2 is a schematic flowchart of a communication method 200 according to embodiments of the present disclosure. The method may be applied to the system illustrated in FIG. 1, but is not limited thereto. The method includes at least some of the following.

At S210: a first device transmits a first information frame, where the first information frame is used for allocating a first measurement setup ID.

In embodiments of the present disclosure, the first information frame transmitted by the first device is used for allocating the first measurement setup ID, which provides a clear solution for measurement setup ID allocation.

Specifically, the first measurement setup ID may be a Measurement Setup ID. A process in which the first device transmits the first information frame used for allocating the Measurement Setup ID may also be referred to as a process in which the first device allocates the Measurement Setup ID, a process in which the first device performs the measurement sensing setup, or the like.

The first information frame transmitted by the first device may be a sensing measurement setup request frame or a sensing measurement setup response frame. A measurement setup ID allocated by the first device may be carried in the sensing measurement setup request frame or the sensing measurement setup response frame transmitted by the first device.

A device that transmits the sensing measurement setup request frame may be referred to as the sensing initiator. The sensing initiator may receive the sensing measurement setup response frame transmitted by a peer end (i.e., the sensing responder). The measurement setup ID allocated by the sensing initiator may be carried in the sensing measurement setup request frame transmitted by the sensing initiator, and accordingly, the measurement setup ID may not be carried in the sensing measurement setup response frame received by the sensing initiator. In other words, in this case, the sensing initiator is the device that allocates the measurement setup ID. Alternatively, the measurement setup ID may not be carried in the sensing measurement setup request frame transmitted by the sensing initiator, and accordingly, the measurement setup ID allocated by the sensing responder may be carried in the sensing measurement setup response frame received by the sensing initiator. In other words, in this case, the sensing responder is the device that allocates the measurement setup ID.

Taking establishment of sensing between the AP device and the STA device as an example. For example, the STA may transmit to the AP a sensing measurement setup request frame that carries a measurement setup ID allocated by the STA; and the AP may reply to the STA with a sensing measurement setup response frame that does not carry the measurement setup ID. As another example, the STA may transmit to the AP a sensing measurement setup request frame that does not carry the measurement setup ID; and the AP may reply to the STA with a sensing measurement setup response frame that carries a measurement setup ID allocated by the AP. As another example, the AP may transmit to the STA a sensing measurement setup request frame that carries the measurement setup ID allocated by the AP; and the STA may reply to the AP with a sensing measurement setup response frame that does not carry the measurement setup ID. The above scenarios are only examples, and the present disclosure does not exclude other scenarios.

For example, the first device transmits the sensing measurement setup request frame (which may also be referred to as the first information frame) to the second device, and the sensing measurement setup request frame carries the measurement setup ID allocated by the first device. The first device receives the sensing measurement setup response frame (which may also be referred to as a second information frame) from the second device, and the sensing measurement setup response frame does not carry the measurement setup ID. A role of the first device is the sensing initiator, and a role of the second device is the sensing responder. In this case, the first device may be the AP and the second device may be the STA. Alternatively, the first device may be the STA and the second device may be the AP.

As another example, the first device receives the sensing measurement setup request frame (which may also be referred to as the second information frame) from the second device, and the sensing measurement setup request frame does not carry the measurement setup ID. The first device transmits the sensing measurement setup response frame (which may also be referred to as the first information frame) to the second device, and the sensing measurement setup response frame carries a measurement setup ID allocated by the second device. The role of the first device is the sensing responder, and the role of the second device is the sensing initiator. In this case, the first device may be the AP and the second device may be the STA. Alternatively, the first device may be the STA and the second device may be the AP.

In the above example, the role of the first device and/or the role of the second device may be determined during a sensing measurement setup. Accordingly, the role of the first device and/or the role of the second device are variable in a single sensing session.

Alternatively, the role of the first device and/or the role of the second device may be determined during a sensing session setup. Accordingly, the role of the first device and/or the role of the second device are invariable in the single sensing session.

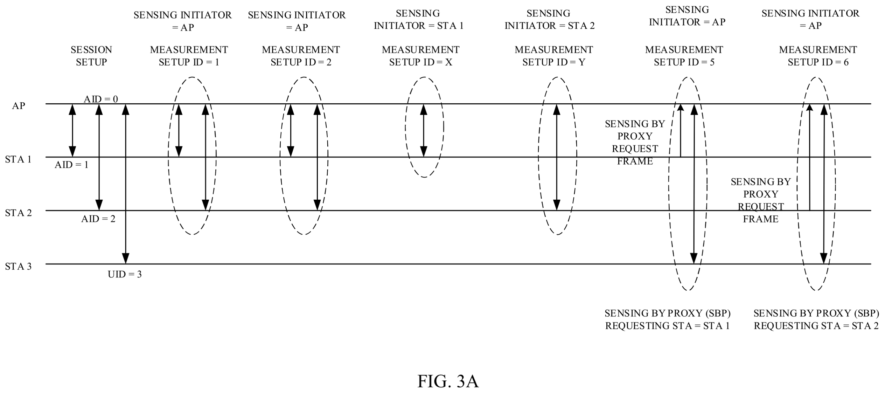

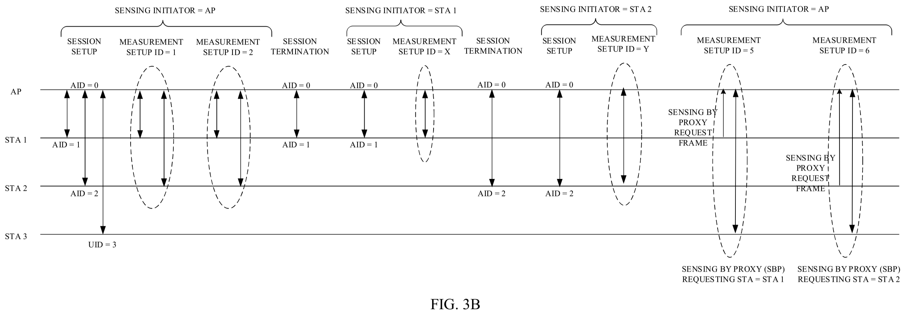

FIG. 3A corresponds to an implementation for allocating the measurement setup ID when roles of devices (including the sensing initiator and the sensing responder) are variable in the single sensing session. FIG. 3B corresponds to an implementation for allocating the measurement setup ID when the roles of the devices (including the sensing initiator and the sensing responder) are invariable in the single sensing session.

In FIG. 3A, the role of the sensing initiator and the role of the sensing responder are determined during the sensing measurement setup.

Specifically, the role of the sensing initiator and the role of the sensing responder are not determined during the sensing session setup, and the role of the sensing initiator and the role of the sensing responder are determined during the sensing measurement setup. In this case, the role of the sensing initiator and the role of the sensing responder are variable in the single sensing session.

In FIG. 3A, the sensing session setup is pairwise-based, and the sensing session in this embodiment is established between the AP and one STA. Sensing session setups performed between the AP and STA 1, the AP and STA 2, and the AP and STA 3 in FIG. 3A are taken as examples to introduce a relationship between setting the Measurement Setup ID and the sensing initiator. The operations are listed as follows.
1) the first device (specifically, e.g., the AP) serves as the sensing initiator and sets Measurement Setup ID = 1 with the second device (e.g., STA 1 and STA 2), and STA 1 and STA 2 serve as the sensing responders.
2) the first device (e.g., the AP) serves as the sensing initiator and sets Measurement Setup ID = 2 with the second device (e.g., STA 1 and STA 2), and STA 1 and STA 2 serve as the sensing responders.
3) the first device (specifically e.g. STA 1) serves as the sensing initiator and sets Measurement Setup ID = x with the AP, and the second device (e.g. the AP) serves as the sensing responder. It may be seen that in this operation, a role of the AP and a role of STA 1 are changed. The role of the AP is changed from the sensing initiator to the sensing responder, and the role of STA 1 is changed from the sensing responder to the sensing initiator.
   Since STA 1 is involved in both Measurement Setup ID = 1 and Measurement Setup ID = 2, STA 1 can set *x* to 3 to avoid Measurement Setup ID conflict.
4) the first device (specifically, e.g., STA 2) serves as the sensing initiator and sets the Measurement Setup ID = *y* with the AP, and the second device (e.g., the AP) serves as the sensing responder. It may be seen that in this operation, the role of STA 2 is changed from the sensing responder to the sensing initiator.
   Since Measurement Setup ID = 3 is established separately between STA 1 and the AP, STA 2 does not know whether Measurement Setup ID = 3 is available, and the Measurement Setup ID conflict occurs if STA 2 sets *y* to 3. To avoid the Measurement Setup ID conflict, the AP may uniquely identify a Measurement Setup by using Measurement Setup ID = 3 allocated by STA 2 and information of STA 2, where the information of STA 2 may include at least one of a MAC address, an AID, or a UID of STA 2. As for the Measurement Setup ID conflict, other solutions for addressing the conflict are further proposed in the present disclosure, which will be described below.
5) if STA 1 does not participate in a sensing measurement, STA 1 can request the AP as a proxy of STA 1 to perform the sensing measurement with another STA. For example, STA 1, as a sensing by proxy (SBP) requesting STA, transmits an SBP request frame to the AP to request the AP to perform the sensing measurement with STA 3. In this case, the AP serves as the sensing initiator and sets the Measurement Setup ID with STA 3, and STA 3 serves as the sensing responder. In this operation, the Measurement Setup ID is set by the AP. Since all Measurement Setup IDs are set between the AP and the other end (i.e., the AP knows existing Measurement Setup IDs), the AP can avoid the existing Measurement Setup IDs when setting the Measurement Setup ID, thus avoiding the Measurement Setup ID conflict. For example, in this example, the AP sets Measurement Setup ID = 5. In this case, the AP is the first device.
6) if STA 2 does not participate in the sensing measurement, STA 2 can request the AP as a proxy of STA 2 to perform the sensing measurement with another STA. For example, STA 2, as the SBP requesting STA, transmits the SBP request frame to the AP to request the AP to perform the sensing measurement with STA 3. In this case, the AP serves as the sensing initiator and sets the measurement setup ID with STA 3, and STA 3 serves as the sensing responder. For the same reason as operation 5), the AP can avoid the Measurement Setup ID conflict when setting the measurement setup ID. For example, in this example, the AP sets Measurement Setup ID = 6. In this case, the AP is the first device.

It may be emphasized that numbering in operations 1) to 6) above is only intended for ease of illustration, rather than limiting the chronological order between the operations.

It may be noted that in the solution illustrated in FIG. 3A, a trigger-based (TB) session and a non-TB session can coexist in a same sensing session because the role of the sensing initiator may be variable in the sensing session according to different Sensing Measurement IDs.

In FIG. 3B, the role of the sensing initiator and the role of the sensing responder are determined during the sensing session setup.

Specifically, the role of the sensing initiator and the role of the sensing responder are determined during the sensing session setup, and the role of the sensing initiator and the role of the sensing responder are invariable during the sensing measurement setup. If the roles need to be changed, related sensing sessions that have been established need to be terminated first and a new sensing session is then re-established.

For example, the role of the first device and/or the role of the second device being determined during the sensing session setup includes the following. In a case where an initial sensing session is terminated and a current sensing session is established, the role of the first device and/or the role of the second device are determined during a sensing session setup of the current sensing session, where the initial sensing session is a sensing session prior to the current sensing session.

Specifically, for example, in the initial sensing session, the role of the first device is the sensing responder, and the role of the second device is the sensing initiator. When the initial sensing session is terminated and the current sensing session is established, the role of the first device and/or the role of the second device are re-determined or changed (e.g., the role of the first device is changed to the sensing initiator, and the role of the second device is changed to the sensing responder). As another example, in the initial sensing session, the role of the first device is the sensing initiator, and the role of the second device is the sensing responder. When the initial sensing session is terminated and the current sensing session is established, the role of the first device and/or the role of the second device are re-determined or changed (e.g., the role of the first device is changed to the sensing responder, and the role of the second device is changed to the sensing initiator). The first device may be the AP and the second device may be the STA. Alternatively, the first device may be the STA and the second device may be the AP.

In FIG. 3B, the sensing session setup is pairwise-based, and the sensing session in this embodiment is established between the AP and one STA. Sensing session setups performed between the AP and STA 1, the AP and STA 2, and the AP and STA 3 in FIG. 3B are taken as examples to introduce the relationship between setting the Measurement Setup ID and the sensing initiator. The operations are listed as follows.
1) when the AP establishes the sensing session setup with STA 1, STA 2, and STA 3 respectively, the AP determines the roles of all devices and sets Sensing Initiator = AP.
2) the first device (specifically, e.g., the AP) serves as the sensing initiator and sets Measurement Setup ID = 1 with the second device (e.g., STA 1 and STA 2), and STA 1 and STA 2 serve as the sensing responders.
3) the first device (specifically, e.g., the AP) serves as the sensing initiator and sets Measurement Setup ID = 2 with the second device (e.g., STA 1 and STA 2), and STA 1 and STA 2 serve as the sensing responders.
4) if a role of a device needs to be changed, for example, STA 1 is expected to be the sensing initiator, a sensing session that has been established between the AP and STA 1 needs to be terminated, a new sensing session setup is then re-performed between the AP and STA 1, and Sensing Initiator = STA 1 is set. STA 1 serves as the sensing initiator and sets Measurement Setup ID = x with the AP, and the AP serves as the sensing responder. In this case, STA 1 is the first device, and STA 1 performs the sensing session setup with the AP.
   Since STA 1 is involved in both Measurement Setup ID = 1 and Measurement Setup ID = 2, STA 1 can set x to 3 to avoid Measurement Setup ID conflict.
5) if the role of a device needs to be changed, for example, STA 2 is expected to be the sensing initiator, a sensing session that has been established between the AP and STA 2 needs to be terminated, a new sensing session setup is then re-performed between the AP and STA 2, and Sensing Initiator = STA 2 is set. STA 2 serves as the sensing initiator and sets Measurement Setup ID = *y* with the AP, and the AP serves as the sensing responder. In this case, STA 2 is the first device, and STA 2 performs the sensing session setup with the AP.
   Since Measurement Setup ID = 3 is established separately between STA 1 and the AP, STA 2 does not know whether Measurement Setup ID = 3 is available, and the Measurement Setup ID conflict occurs if STA 2 sets *y* to 3. To avoid the Measurement Setup ID conflict, the AP may uniquely identify the Measurement Setup by using Measurement Setup ID = 3 allocated by STA 2 and information of STA 2, where the information of STA 2 may include at least one of the MAC address, the AID, or the UID of STA 2. As for the Measurement Setup ID conflict, other solutions for addressing the conflict are further proposed in the present disclosure, which will be described below.
6) if STA 1 does not participate in the sensing measurement, STA 1 can request the AP as a proxy of STA 1 to perform the sensing measurement with another STA. For example, STA 1, as an SBP requesting STA, transmits the SBP request frame to the AP to request the AP to perform the sensing measurement with STA 3. In this case, the AP serves as the sensing initiator and sets the Measurement Setup ID with STA 3, and STA 3 serves as the sensing responder. In this operation, the Measurement Setup ID is set by the AP. Since all Measurement Setup IDs are set between the AP and the other end (i.e., the AP knows existing measurement setup IDs), the AP can avoid the existing Measurement Setup IDs when setting the Measurement Setup ID, thus avoiding the Measurement Setup ID conflict. For example, in this example, the AP sets Measurement Setup ID = 5. In this case, the AP is the first device.
7) if STA 2 does not participate in the sensing measurement, STA 2 can request the AP as a proxy of STA 2 to perform the sensing measurement with another STA. For example, STA 2, as the SBP requesting STA, transmits the SBP request frame to the AP to request the AP to perform the sensing measurement with STA 3. In this case, the AP serves as the sensing initiator and sets the Measurement Setup ID with STA 3, and STA 3 serves as the sensing responder. For the same reason as operation 6), the AP can avoid the Measurement Setup ID conflict when setting the measurement setup ID. For example, in this example, the AP sets Measurement Setup ID = 6. In this case, the AP is the first device.

It may be emphasized that numbering in operations 1) to 7) above is only intended for ease of illustration, rather than limiting the chronological order between the operations.

It may be noted that in the solution illustrated in FIG. 3B, the TB session and the non-TB session are not allowed to coexist in the same sensing session because the role of the sensing initiator is invariable in one sensing session.

With reference to FIG. 3A and FIG. 3B, the foregoing describes ways of performing the sensing measurement setup (allocating the Measurement Setup ID) between the sensing initiator and the sensing responder, and introduces two different ways respectively regarding whether the role of the sensing initiator and the role of the sensing responder are variable in the same sensing session. As for the Measurement Setup ID conflict mentioned above, details will be introduced below.

For example, if the measurement setup ID is allocated by the AP, the second device receiving the first measurement setup ID may uniquely identify the measurement setup by using the first measurement setup ID. Further, if the measurement setup ID can also be allocated by the STA, the second device receiving the first measurement setup ID may uniquely identify the measurement setup by using the first measurement setup ID and information of the first device, where the information of the first device may include a MAC address/AID/UID of the first device.

### Example 1:

In a case where the measurement setup ID can be allocated by the AP or the STA (i.e., there is no restriction on the entity that allocates the measurement setup ID), if the first information frame for allocating the measurement setup ID is transmitted by the first device to the second device, the first measurement setup ID and the information of the first device may be used by the second device to uniquely identify the measurement setup, where the second device is a device that receives the first information frame, and the information of the first device includes at least one of the MAC address, the AID, or the UID of the first device. The information of the first device may be carried in the first information frame, e.g., the information of the first device may be carried in a subfield for carrying the MAC address of the first device and/or a subfield for carrying the AID and/or UID of the first device in the first information frame.

For example, a tuple <Initiator MAC Address/AID/UID, Measurement Setup ID> may be used to identify one measurement setup.

The sensing initiator can distinguish the Measurement Setup ID allocated by itself. However, as for the sensing responder, when Measurement Setup IDs allocated by different sensing initiators are repeated, the sensing responder needs to determine which sensing initiator allocates each of these repeated Measurement Setup IDs specifically. Therefore, the tuple <Initiator MAC Address/AID/UID, Measurement Setup ID> may be formed by combining the MAC address/AID/UID of the sensing initiator and the Measurement Setup ID allocated by the sensing initiator to identify one specific Measurement Setup. In this way, the sensing initiator can distinguish the repeated Measurement Setup IDs, and thus the Measurement Setup ID allocated by the sensing initiator may be used to identify the Measurement Setup.

For example, a tuple <AID = 1, Measurement Setup ID = x> is used by the AP to uniquely identify the Measurement Setup established by STA 1 and identified as Measurement Setup ID = x in operation 3) illustrated in FIG. 3A, where STA 1 has AID = 1.

As another example, a tuple <AID = 2, Measurement Setup ID = *y*> is used by the AP to uniquely identify the Measurement Setup established by STA 2 and identified as Measurement Setup ID = *y* in operation 4) illustrated in FIG. 3A, where STA 2 has AID = 2.

As can be seen, even if *x* = *y*, the AP can distinguish the Measurement Setup ID allocated by STA 1 from the Measurement Setup ID allocated by STA 2, thus avoiding the Measurement Setup ID conflict.

### Example 2:

In a case where the measurement setup ID can only be allocated by the AP, if the first device transmits the first information frame for allocating the measurement setup ID to the second device, the first measurement setup ID is used by the second device to uniquely identify the measurement setup.

For example, if the Measurement Setup ID can only be allocated by the AP, the AP can set a Measurement Setup ID of the Measurement Setup between the AP and STA 1 and a Measurement Setup ID of the Measurement Setup between the AP and STA 2 to different values, thus avoiding the Measurement Setup ID conflict. For example, Measurement Setup ID = *x* is set to *x* = 3, and Measurement Setup ID *= y* is set to *y =* 4.

From the above two ways, it may be seen that if the Measurement Setup ID is always allocated by the AP, devices at both ends can distinguish the Measurement Setup only by the Measurement Setup ID. If the Measurement Setup ID can be allocated by the AP or the STA, a device allocating the Measurement Setup ID can distinguish the Measurement Setup only by the Measurement Setup ID, while the device at the other end needs to distinguish the Measurement Setup by the tuple formed by the Measurement Setup ID and information of the device allocating the Measurement Setup ID.

The following will describe a frame structure of the sensing measurement setup request frame, a frame structure of the sensing measurement setup response frame, implementations for allocating the measurement setup ID by using the sensing measurement setup request frame, and implementations for allocating the measurement setup ID by using the sensing measurement setup response frame.

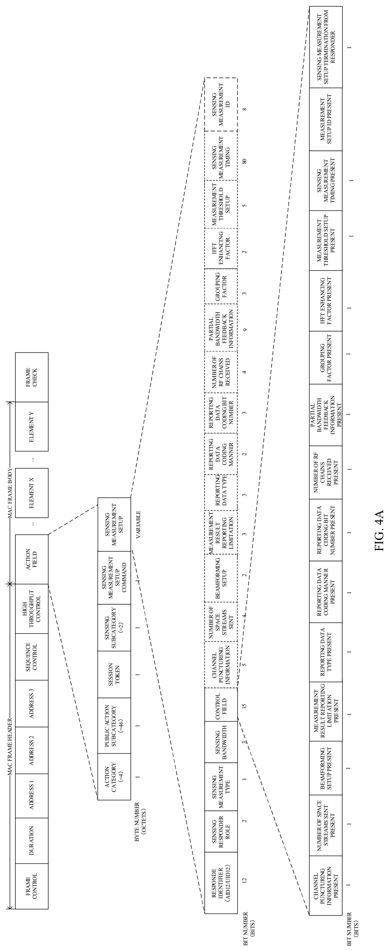

FIG. 4A is a schematic diagram of a frame structure of a sensing measurement setup request frame according to embodiments of the present disclosure.

In some implementations, the sensing measurement setup request frame includes a first indication subfield and/or a first measurement setup ID subfield. The first indication subfield indicates whether the sensing measurement setup request frame includes the first measurement setup ID subfield. The first measurement setup ID subfield carries the first measurement setup ID.

The first indication subfield may be a Measurement Setup ID Present subfield in FIG. 4A, and the measurement setup ID subfield may be a Measurement Setup ID Subfield in FIG. 4A. The Measurement Setup ID Present subfield indicates whether the Measurement Setup ID subfield is present. For example, Measurement Setup ID Present = 0 represents that the Measurement Setup ID subfield is not present in the Sensing Measurement Setup Request frame; and Measurement Setup ID Present = 1 represents that the Measurement Setup ID subfield is present in the Sensing Measurement Setup Request frame. The Measurement Setup ID subfield carries the measurement setup ID.

If the sensing initiator allocates the sensing measurement setup, the sensing measurement setup request frame transmitted by the sensing initiator includes the Measurement Setup ID subfield, and the Measurement Setup ID subfield carries the Measurement Setup ID allocated by the sensing initiator. If the sensing initiator did not allocate the measurement setup, the sensing measurement setup request frame transmitted by the sensing initiator does not include the Measurement Setup ID subfield.

Further, the sensing measurement setup request frame includes a subfield for indicating whether the sensing responder is allowed to initiate a sensing measurement setup termination, such as a Sensing Measurement Setup Termination from Responder subfield in FIG. 4A. For example, Sensing Measurement Setup Termination from Responder =1 represents that the sensing responder is allowed to initiate the sensing measurement setup termination; and Sensing Measurement Setup Termination from Responder = 0 represents that the sensing responder is not allowed to initiate the sensing measurement setup termination. In the subsequent sensing measurement setup termination procedure, the sensing responder can initiate or not initiate a sensing measurement setup termination according to the setting.

As illustrated in FIG. 4A, the Measurement Setup ID Present subfield and the Sensing Measurement Setup Termination from Responder subfield may be included in a control field in the sensing measurement setup request frame.

As illustrated in 4A, the Measurement Setup ID Present subfield may be 1 bit in length, the Sensing Measurement Setup Termination from Responder subfield may be 1 bit in length, and the Measurement Setup ID subfield may be 8 bits or 0 bits in length.

Further, the sensing measurement setup request frame includes a subfield for carrying a MAC address of a device that transmits the frame (e.g., the first device), such as a MAC address subfield. The MAC address subfield may be included in a MAC frame header of the sensing measurement setup request frame. For example, address 1/address 2/address 3 in the MAC frame header illustrated in FIG. 4A is the MAC address subfield.

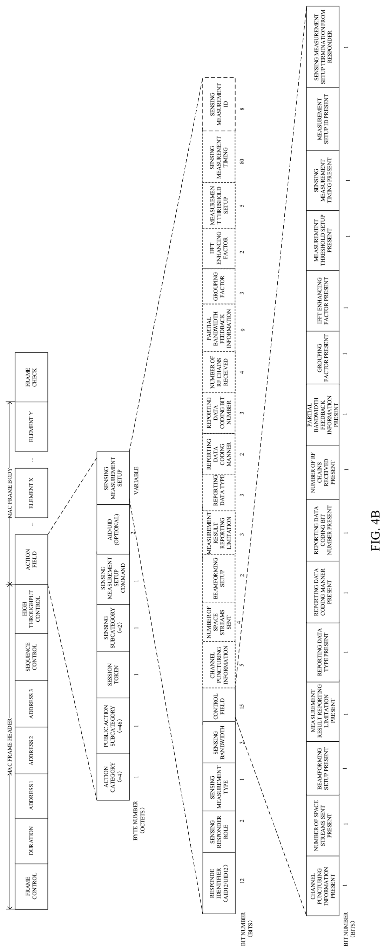

FIG. 4B is a schematic diagram of another frame structure of a sensing measurement setup request frame according to embodiments of the present disclosure. The sensing measurement setup request frame as illustrated in FIG. 4B can include a field for carrying an AID and/or UID of the device that transmits the frame (e.g., the first device), such as an AID/UID field illustrated in FIG. 4B. If the sensing measurement setup request frame is transmitted by the STA, the sensing measurement setup request frame may explicitly have one AID/UID field for indicating an AID/UID of the STA, and an AP receiving the sensing measurement setup request frame can combine the Measurement Setup ID and the AID/UID of the STA together to identify one Measurement Setup (ID), thereby avoiding conflict between Measurement Setup IDs allocated by different STAs as sensing initiators. As illustrated in FIG. 4B, the AID/UID field may be included in an action field in the sensing measurement setup request frame, and the AID/UID field may be 2 bytes in length. Other structures of the sensing measurement setup request frame as illustrated in FIG. 4B are the same as those illustrated in FIG. 4A, which will not be repeated herein.

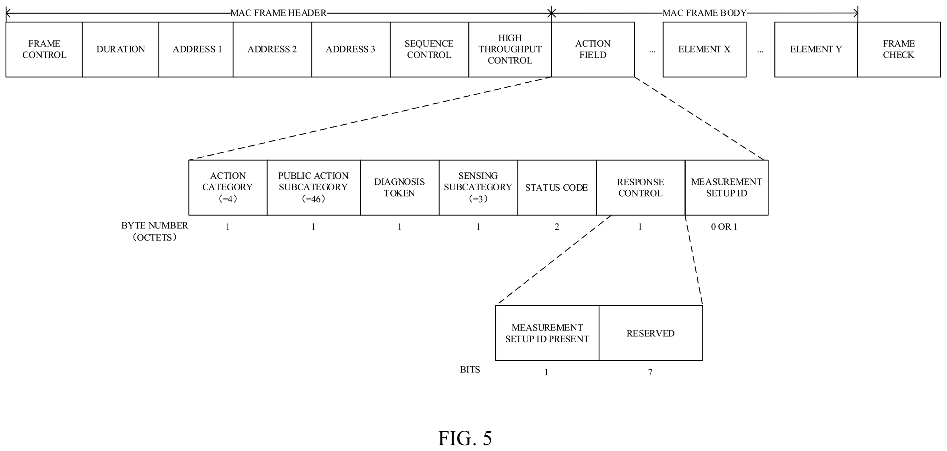

FIG. 5 is a schematic diagram of a frame structure of a sensing measurement setup response frame according to embodiments of the present disclosure.

In some implementations, the sensing measurement setup response frame includes a third indication subfield and/or a third measurement setup ID field. The third indication subfield indicates whether the sensing measurement setup response frame includes the third measurement setup ID field. The third measurement setup ID field carries the first measurement setup ID.

In some implementations, the sensing measurement setup response frame includes a response control field, and the response control field includes the third indication subfield.

The third indication subfield may be a Measurement Setup ID Present subfield in FIG. 5, and the third measurement setup ID field may be a Measurement Setup ID field in FIG. 5. The Measurement Setup ID Present subfield indicates whether the Measurement Setup ID field is present. For example, Measurement Setup ID Present = 0 represents that the Measurement Setup ID field is not present in the Sensing Measurement Setup Request frame; and Measurement Setup ID Present = 1 represents that the Measurement Setup ID field is present in the Sensing Measurement Setup Request frame. The Measurement Setup ID field carries the measurement setup ID.

If the sensing responder allocates the sensing measurement setup, the sensing measurement setup response frame transmitted by the sensing responder includes the Measurement Setup ID field, and the Measurement Setup ID field carries the Measurement Setup ID allocated by the sensing responder. If the sensing responder did not allocate the measurement setup, the sensing measurement setup response frame transmitted by the sensing responder does not include the Measurement Setup ID field.

As illustrated in FIG. 5, the Measurement Setup ID Present subfield may be included in the response control field in the sensing measurement setup response frame.

As illustrated in FIG. 5, the Measurement Setup ID Present subfield may be 1 bit in length; the Response Control field may be 1 byte in length, including the Measurement Setup ID Present subfield and a reserved subfield (Reserved) with 7 bits in length; and the Measurement Setup ID field may be 1 byte or 0 bytes in length.

In conjunction with the sensing measurement setup request frame and the sensing measurement setup response frame, several specific examples are given below.

### Example 1:

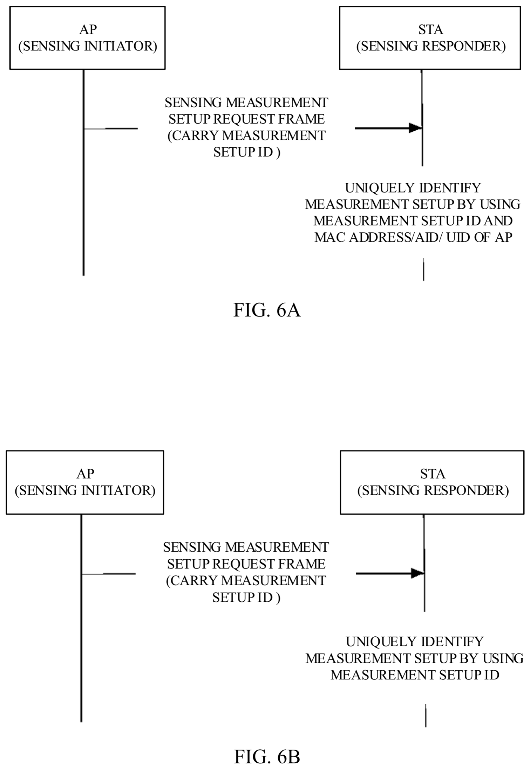

Two implementations of Example 1 are illustrated in FIG. 6A and FIG. 6B, respectively.

The AP, as the sensing initiator, performs the sensing measurement setup and transmits a sensing measurement setup request frame in which the Measurement Setup ID Present subfield is set to 1 and the Measurement Setup ID subfield carries the Measurement Setup ID allocated by the AP (e.g. Measurement Setup ID = *m*).

The STA, as the sensing responder, receives the sensing measurement setup request frame and then replies with a sensing measurement setup response frame in which the Measurement Setup ID Present subfield is set to 0.

Taking FIG. 6A as an example, if the first way of addressing the Measurement Setup ID conflict is adopted, i.e., in the case where the measurement setup ID can be allocated by the AP or the STA, the STA can uniquely identify the measurement setup by using the Measurement Setup ID allocated by the AP and a MAC address/AID/UID of the AP. For example, the STA may uniquely identify the measurement setup by using a tuple <AID=0, Measurement Setup ID=*m*>, where AID=0 is the AID of the AP.

Taking FIG. 6B as an example, if the second way of addressing the Measurement Setup ID conflict is adopted, i.e., the measurement setup ID is always allocated by the AP, the AP can ensure, when allocating the measurement setup ID, that the Measurement Setup ID conflict can be avoided. Therefore, the STA can uniquely identify the Measurement Setup by using a value *m* of the Measurement Setup ID allocated by the AP.

### Example 2.1:

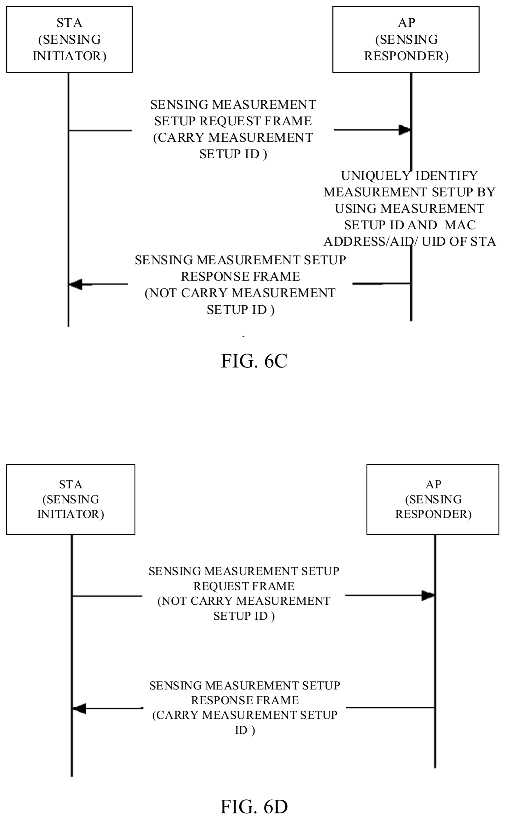

An implementation of Example 2.1 is illustrated in FIG. 6C.

The STA, as the sensing initiator, performs the sensing measurement setup and transmits a sensing measurement setup request frame in which the Measurement Setup ID Present subfield is set to 1 and the Measurement Setup ID subfield carries the Measurement Setup ID allocated by the STA.

The AP, as the sensing responder, receives the sensing measurement setup request frame and then combines the MAC address/AID/UID of the STA to form a tuple <initiator MAC Address/AID/UID, Measurement Setup ID> to identify one specific measurement setup.

The AP replies with a sensing measurement setup response frame in which the Measurement Setup ID Present subfield is set to 0.

In Example 2.1, the first way of addressing the Measurement Setup ID conflict is adopted, i.e., in the case where the measurement setup ID can be allocated by the AP or the STA, the AP can uniquely identify the measurement setup by using the Measurement Setup ID allocated by the STA and a MAC address/AID/UID of the STA.

### Example 2.2:

An implementation of Example 2.2 is illustrated in FIG. 6D.

The STA, as the sensing initiator, transmits a sensing measurement setup request frame in which the Measurement Setup ID Present subfield is set to 0 and thus the sensing measurement setup request frame does not carry the Measurement Setup ID, which indicates that the Measurement Setup ID is allocated by the AP.

The AP, as the sensing responder, receives the sensing measurement setup request frame and then replies with a sensing measurement setup response frame in which the Measurement Setup ID Present subfield is set to 1 and the Measurement Setup ID field carries the Measurement Setup ID allocated by the AP.

In Example 2.2, the second way of addressing the Measurement Setup ID conflict is adopted, i.e., the measurement setup ID is always allocated by the AP.

In some implementations, the STA may transmit an SBP request frame to the AP to request the AP as a proxy of the STA to perform the sensing measurement with the sensing responder. The SBP request frame is transmitted by the STA and received by the AP, so as to request the AP to perform WLAN sensing as a sensing proxy of the STA. The STA that transmits the SBP request frame does not participate in the sensing measurement, the AP serves as the sensing initiator, and other STA(s) participating in the sensing measurement serve as the sensing responder.

For example, before the first device transmits the sensing measurement setup request frame, the following operations may be performed. The first device receives the second information frame from a first STA, where the second information frame is used for requesting the first device to perform the sensing measurement as a proxy of the first STA. In this case, the first device may be the AP device, and the second information frame may be the SBP request frame.

The SBP request frame may include at least one of: a measurement instance period subfield for carrying a measurement period to perform sensing by the first device as a proxy being requested; a measurement instance duration subfield for carrying a measurement duration to perform sensing by the first device as a proxy being requested; a channel state information (CSI)-based measurement result subfield for indicating whether a sensing measurement result type required for performing sensing by the first device as a proxy being requested is CSI information; a beam signal-to-noise ratio (SNR)-based measurement result subfield for indicating whether the sensing measurement result type required for performing sensing by the first device as a proxy being requested is beam SNR information; a number-of-responders field for indicating the quantity of sensing responders participating in a measurement setup and performing a sensing measurement; a responder information list present subfield for indicating whether the SBP request frame includes a responder information list; or a responder information list field for carrying information of one or more sensing responders.

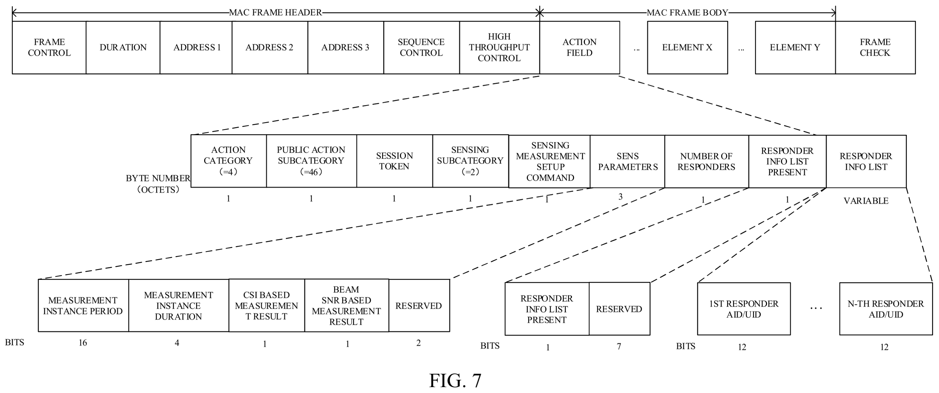

FIG. 7 is a schematic structural diagram of an SBP request frame according to embodiments of the present disclosure.

The measurement instance period subfield may be a Measurement Instance Period subfield for indicating a measurement period to perform sensing by the AP as the proxy.

The measurement instance duration subfield may be a Measurement Instance Duration subfield for indicating a measurement duration to perform sensing by the AP as the proxy.

The CSI-based measurement result subfield may be a CSI Based Result subfield for indicating whether the sensing measurement result type required for performing sensing as the proxy by the AP is CSI information. For example, the CSI Based Result subfield may be 1 bit in length, CSI Based Result = 1 representing that a requested measurement result is CSI-based, and CSI Based Result = 0 representing that the requested measurement result is not CSI-based. Alternatively, CSI Based Result = 0 representing that the requested measurement result is CSI-based, and CSI Based Result = 1 representing that the requested measurement result is not CSI-based.

The beam SNR-based measurement result subfield may be a Beam SNR Based Result subfield for indicating whether the sensing measurement result type required for performing sensing by the AP as a proxy is Beam SNR information. For example, the Beam SNR Based Result subfield may be 1 bit in length, Beam SNR Based Result = 1 representing that the requested measurement result is based on the Beam SNR information, and Beam SNR Based Result = 0 representing that the requested measurement result is not based on the Beam SNR information. Alternatively, Beam SNR Based Result = 0 representing that the requested measurement result is based on the Beam SNR information, and Beam SNR Based Result = 1 representing that the requested measurement result is not based on the Beam SNR information.

The number-of-responders field may be a Number of Responders field for indicating the quantity of sensing responders participating in the measurement setup and performing the sensing measurement.

The responder information list present subfield may be a Responder Info List Present subfield for indicating whether the SBP request frame includes a responder information list field (e.g., a Responder Info List field in FIG. 7). For example, Responder Info List Present = 1 represents that the SBP request frame includes the Responder Info List field, and Responder Info List Present = 0 represents that the SBP request frame does not include the Responder Info List field. Alternatively, Responder Info List Present = 0 represents that the SBP request frame includes the Responder Info List field, and Responder Info List Present = 1 represents that the SBP request frame does not include the Responder Info List field.

The responder information list field may be a Responder Info List field. For example, when Responder Info List Present = 1, the Responder Info List field includes AID/UID subfields of one or more sensing responders (Responder AID/UID subfields), and the quantity of Responder AID/UID subfields is indicated by the Number of Responders.

It may be noted that in a case where the STA only indicates to the AP how many sensing responders are required to participate in the sensing measurement, the Number of Responders indicates the quantity of the sensing responders, and the Responder Info List is not present. In a case where the STA indicates to the AP exactly which sensing responders are required to participate in the sensing measurement, the Number of Responders indicates the quantity of the sensing responders, and the Responder Info List indicates the ID of each sensing responder.

As illustrated in FIG. 7, the SBP request frame can include the MAC frame header and a MAC frame body. The MAC frame header can include a frame control field, a duration field, an address 1 field, an address 2 field, an address 3 field, a sequence control field, and a high throughput (HT) control field. The MAC frame body can include an action field, multiple element fields, and a frame check field. The action field may include an action category field (which may be 1 byte in length and may have a value of 4), a public action subcategory field (which may be 1 byte in length and may have a value of 46), a session token field (which may be 1 byte in length), a sensing subcategory field (which may be 1 byte in length and may have a value of 2), a sensing measurement setup command field (which may be 1 byte in length), a SENS parameter field (which may be 3 bytes in length), the number of responders field (which may be 1 byte in length), the responder information list present field (which may be 1 byte in length), and the responder information list field (which may have a variable length). The SENS parameter field may include the Measurement Instance Period subfield (which may be 16 bits in length), the Measurement Instance Duration subfield (which may be 4 bits in length), the CSI Based Result subfield (which may be 1 bit in length), the Beam SNR Based Result subfield (which may be 1 bit in length), and a reserved subfield (which may be 2 bits in length).

The above embodiments implement the method for changing the role of the sensing initiator and the role of the sensing responder at different phases (i.e., during the sensing session setup or the sensing measurement setup). Moreover, two solutions are proposed for addressing the Measurement Setup ID conflict that may be caused when the non-AP STA allocates the measurement setup ID as the sensing initiator. The two solutions include: the first, identifying the specific measurement setup or measurement setup ID by using the tuple <initiator MAC Address/AID/UID, Measurement Setup ID>, and the second, always allocating the Measurement Setup ID by the AP.

Embodiments of the present disclosure further propose a communication method for implementing a termination of a sensing measurement setup. Embodiments of the present disclosure propose a solution of initiating a sensing measurement setup termination by different roles and design related restriction rules, such that the sensing measurement setup can be terminated more flexibly and reasonably. Details will be described below with reference to the accompanying drawings.

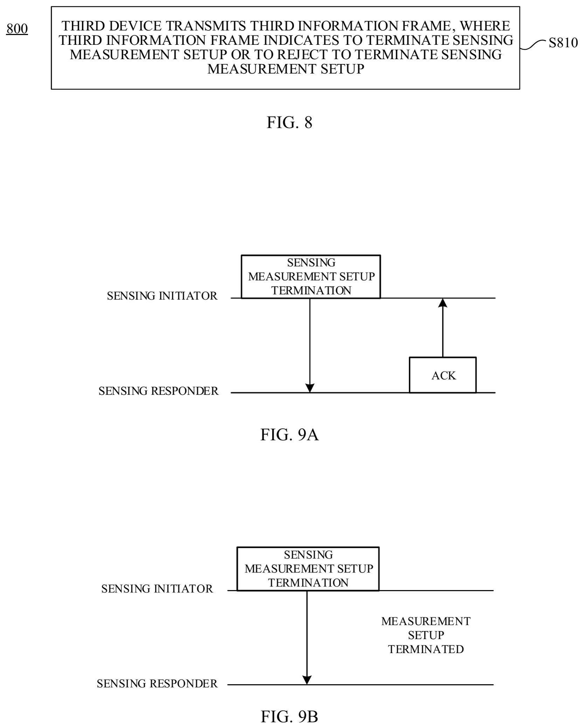

FIG. 8 is a flowchart for implementing a communication method 800 according to embodiments of the present disclosure. The method 800 includes the following.

At S810: a third device transmits a third information frame, where the third information frame indicates to terminate the sensing measurement setup or to reject to terminate the sensing measurement setup.

In some implementations, the third information frame includes a sensing measurement setup termination frame.

Before S810 is performed, the method may further include the following. The third device receives a fourth information frame, where the fourth information frame is used for requesting to terminate the sensing measurement setup.

In some implementations, the fourth information frame includes a sensing measurement setup termination request frame.

According to different roles that initiate a sensing measurement setup termination and whether a sensing responder is allowed to initiate a sensing measurement setup termination request, the following solutions are provided.

Solution 1: a sensing initiator initiates the sensing measurement setup termination.

In this solution, the sensing initiator transmits the sensing measurement setup termination frame to the sensing responder, and a related Sensing Measurement Setup can be terminated without the consent of the sensing responder.

As illustrated in 9A, if the sensing measurement setup termination frame is defined as an acknowledgement (Ack) required frame type (Action) frame, the sensing responder may transmit an Ack frame to acknowledge the sensing measurement setup termination initiated by the sensing initiator.

As illustrated in FIG. 9B, if the sensing measurement setup termination frame is defined as a no acknowledgement (Ack) required frame type (Action No Ack) frame, the sensing responder does not transmit any frames but performs the sensing measurement setup termination by default.

The sensing measurement setup termination frame transmitted by the sensing initiator may carry a reason for terminating the sensing measurement setup, so as to facilitate the sensing responder to perform subsequent communication/sensing scheduling.

Solution 2: the sensing responder initiates the sensing measurement setup termination.

Solution 2 has two manners. The first manner is that the sensing responder can initiate a request for terminating the sensing measurement setup by default, but whether to terminate the sensing measurement setup is still decided by the sensing initiator. The second manner is that the sensing responder initiates, as indicated, a request for terminating the sensing measurement setup. The two manners are described in detail respectively as follows.

### Manner 1 of Solution 2:

In Manner 1, the sensing responder can initiate the request for terminating the sensing measurement setup by default, but whether to terminate the sensing measurement setup is still decided by the sensing initiator.

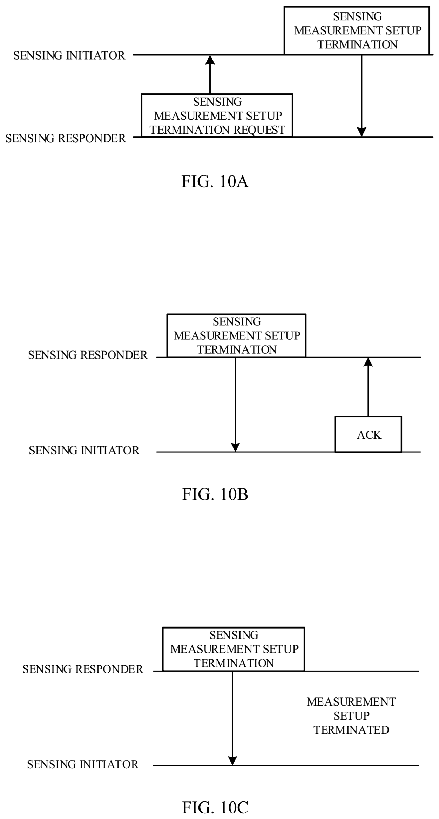

As illustrated in FIG. 10A, the sensing responder transmits the sensing measurement setup termination request frame to request to terminate the sensing measurement setup, and the sensing initiator processes the request by replying with the sensing measurement setup termination frame, e.g., termination (i.e., accepts a termination request) or rejection of the termination (i.e., rejects the termination request).

The sensing measurement setup termination request frame is preferably Action No Ack, which is not limited in the present disclosure.

The sensing measurement setup termination request frame transmitted by the sensing responder can carry the reason for terminating the sensing measurement setup, and the sensing measurement setup termination frame that the sensing initiator replies with may also indicate an acceptance/rejection of termination of the sensing measurement setup.

### Manner 2 of Solution 2:

The sensing responder decides, as indicated, whether to initiate the sensing measurement setup termination request.

As described in the implementation of the sensing measurement setup, whether the sensing responder is allowed to initiate the sensing measurement setup termination request is indicated explicitly when the sensing initiator and the sensing responder perform the sensing measurement setup.

For example, the sensing measurement setup request frame includes a subfield for indicating whether the sensing responder is allowed to initiate the sensing measurement setup termination (e.g., a Sensing Measurement Setup Termination from Responder subfield). For example, Sensing Measurement Setup Termination from Responder = 1 represents that the sensing responder is allowed to initiate the sensing measurement setup termination request (but whether to terminate the sensing measurement setup is decided by the sensing initiator); and Sensing Measurement Setup Termination from Responder = 0 represents that the sensing responder is not allowed to initiate the sensing measurement setup termination request. The opposite value may also be taken, e.g. 0 represents allowed and 1 represents not allowed.

According to the above setting, the sensing responder can initiate/not initiate the sensing measurement setup termination request. If the sensing responder is allowed to initiate the sensing measurement setup termination request, the subsequent procedure is the same as that of Manner 1 of Solution 2, which is not repeated herein.

If the sensing responder is not allowed to initiate the sensing measurement setup termination request, and only the sensing initiator can initiate the sensing measurement setup termination, the subsequent procedure is the same as that of Solution 1, which is not repeated herein.

Solution 3: the sensing responder initiates the sensing measurement setup termination.

In this solution, the sensing responder transmits the sensing measurement setup termination frame to the sensing initiator, and the related Sensing Measurement Setup can be terminated without the consent of the sensing initiator.

As illustrated in FIG. 10B, if the sensing measurement setup termination frame is defined as Action frame, the sensing initiator may transmit the Ack frame or other frames to acknowledge the sensing measurement setup termination initiated by the sensing responder.

As illustrated in FIG. 10C, if the sensing measurement setup termination frame is defined as Action No Ack frame, the sensing initiator does not transmit any frames but performs the Sensing Measurement Setup Termination by default.

The sensing measurement setup termination frame transmitted by the sensing responder may carry the reason for terminating the sensing measurement setup, e.g., the reason is carried in a Reason Code field, thus facilitating the sensing initiator to perform subsequent communication/sensing scheduling.

The above describes the sensing measurement setup termination procedure, and the following will describe the sensing measurement setup termination request frame and the sensing measurement setup termination frame used in this procedure.

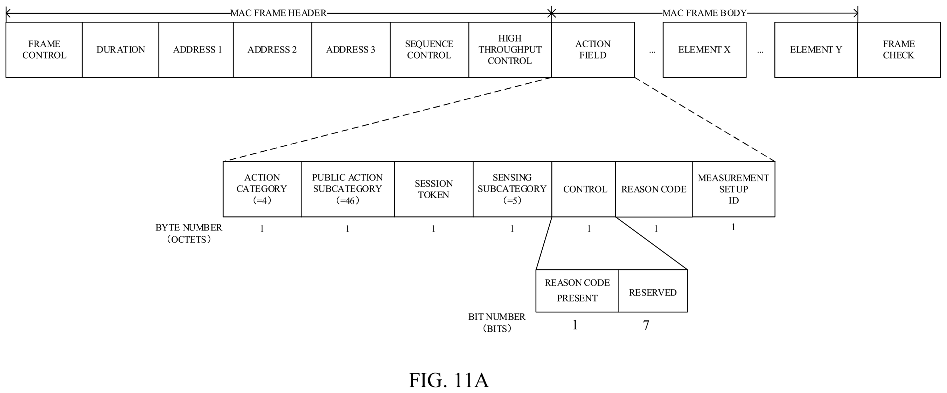

FIG. 11A is a schematic diagram of a frame structure of a sensing measurement setup termination request frame according to embodiments of the present disclosure. The sensing measurement setup termination request frame is transmitted by the sensing responder to request to terminate a measurement setup.

When the sensing responder requests to terminate the measurement setup, in some implementations, a reason for requesting to terminate the measurement setup may be indicated in the sensing measurement setup termination request frame. For example, as illustrated in FIG. 11A, the sensing measurement setup termination request frame may include a reason code field (Reason Code) for indicating the reason for requesting to terminate the measurement setup, and the reason code may be 1 byte in length.

The reason for requesting to terminate the sensing measurement setup may include at least one of: the sensing responder being in low power; the sensing responder having a lot of cached uplink data to transmit; or the sensing responder being to start peer-to-peer (P2P) communication.

For example, Reason Code = 0 represents that the sensing responder is in low power; Reason Code = 1 represents that the sensing responder no longer participates in the sensing measurement to save power; Reason Code = 2 represents that the sensing responder has a lot of cached uplink data to transmit and no longer participates in the sensing measurement; Reason Code = 3 represents that the sensing responder will start P2P communication and no longer participates in the measurement; and 4 to 255 are reserved. The value of the reason code field is only exemplary, and the reason code field may also be set to other values, as long as a value corresponding to each reason code may be ensured to be different from a value of another reason code.

As illustrated in FIG. 11A, the sensing measurement setup termination request frame may include a reason code present subfield (subfield) for indicating whether the reason code field is present in the sensing measurement setup termination request frame. For example, Reason Code Present = 1 represents that the reason code field is present in the sensing measurement setup termination request frame; and Reason Code Present = 0 represents that the reason code field is not present in the sensing measurement setup termination request frame. The foregoing is only an example, 1 may represent present, and 0 may represent not present.

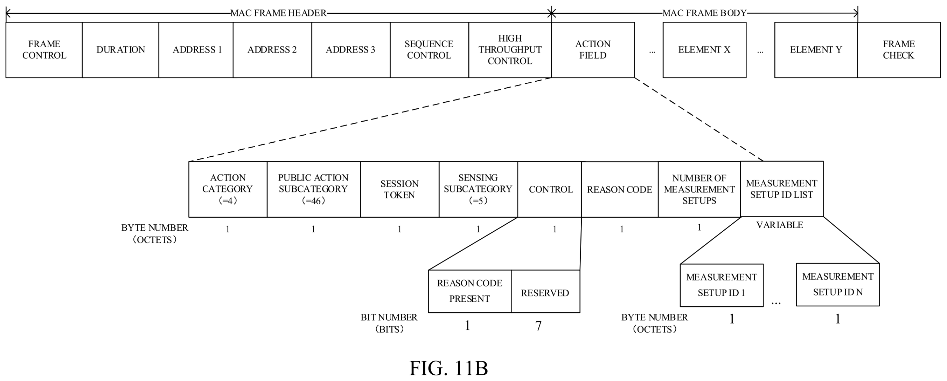

FIG. 11B is a schematic diagram of another frame structure of a sensing measurement setup termination request frame according to embodiments of the present disclosure. Unlike FIG. 11A, the measurement setup termination request frame format illustrated in FIG. 11B may request to terminate one or more measurement setups.

For example, the sensing measurement setup termination request frame further includes at least one of: a number-of-measurement setups field for indicating the quantity of sensing measurement setups requested to be terminated; or a measurement setup ID list field for carrying IDs of one or more sensing measurement setups.

The measurement setup ID list field includes one or more measurement setup ID subfields, and each of the one or more measurement setup ID subfields carries an ID of one sensing measurement setup.

As illustrated in FIG. 11B, the number-of-measurement setups field may be a number-of-measurement setups field; and the measurement setup ID list field may be a measurement setup ID list field. The measurement setup ID list field may include one or more measurement setup ID subfields, and each measurement setup ID subfield carries an ID of one sensing measurement setup requested to be terminated.

The quantity of measurement setup ID subfields included in the measurement setup ID list field is indicated by the number-of-measurement setups field. For example, in FIG. 11B, if a value of the number-of-measurement setups field is set to *N*, the measurement setup ID list field includes N measurement setup ID subfields.

Other contents in the frame structure as illustrated in FIG. 11B are the same as in FIG. 11A, which will not be repeated herein.

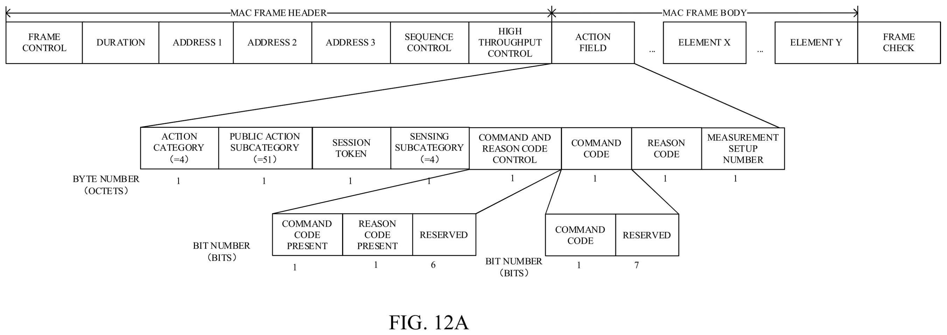

FIG. 12A is a schematic diagram of a frame structure of a sensing measurement setup termination frame according to embodiments of the present disclosure. The sensing measurement setup termination frame is transmitted by the sensing initiator to terminate a measurement setup.

When the sensing initiator terminates the measurement setup, in some implementations, an acceptance/rejection of a request for a sensing responder to terminate the measurement setup may be indicated, and a reason for terminating the measurement setup may be indicated. For example, as illustrated in FIG. 12A, the sensing measurement setup termination frame may include a reason code field (Reason Code) for indicating the reason for terminating the measurement setup, and the reason code may be 1 byte in length.

The reason for requesting to terminate the sensing measurement setup may include at least one of: an upper-layer application indicating to terminate the sensing measurement setup; or the sensing responder requesting to terminate the sensing measurement setup.

For example, Reason Code = 0 represents that the upper-layer application indicates to terminate; Reason Code = 1 represents that the sensing responder requests to terminate; and 2 to 255 are reserved. The value of the reason code field is only exemplary, and the reason code field may also be set to other values, as long as the value corresponding to each reason code may be ensured to be different from the value of another reason code.

After the sensing responder receives the sensing measurement setup termination frame indicating to terminate the measurement setup, the sensing responder terminates the measurement setup indicated. After the sensing responder receives the sensing measurement setup termination frame indicating to reject to terminate the measurement setup, the sensing responder is not allowed to terminate the measurement setup indicated.

As illustrated in FIG. 12A, the sensing measurement setup termination frame may include a command code subfield (e.g., a command code subfield in FIG. 12A). The command code subfield may be included in a command code field of the sensing measurement setup termination frame. The command code subfield may be 1 bit in length, and exemplarily, Command Code = 0 represents terminating the measurement setup, and Command Code = 1 represents rejecting to terminate the measurement setup. Alternatively, Command Code = 1 represents terminating the measurement setup, and Command Code = 0 represents rejecting to terminate the measurement setup.

As for terminating the measurement setup or rejecting to terminate the measurement setup, exemplarily, 0 represents terminating the measurement setup, and 1 represents rejecting to terminate the measurement setup. Alternatively, 1 represents terminating the measurement setup, and 0 represents rejecting to terminate the measurement setup.

Further, the sensing measurement setup termination frame may include a command code present subfield and a reason code present subfield. As illustrated in FIG. 12A, the sensing measurement setup termination frame includes a command-and-reason code control field, and the command-and-reason code control field includes a command code present subfield and a reason code present subfield. The command code present subfield indicates whether a command code is present in the sensing measurement setup termination frame. The reason code present subfield indicates whether a reason code is present in the sensing measurement setup termination frame. For example, Command Code Present = 1 represents that the command code is present in the sensing measurement setup termination frame, and Command Code Present = 0 represents that the command code is not present in the sensing measurement setup termination frame. Alternatively, Command Code Present = 1 represents that the command code is not present in the sensing measurement setup termination frame, and Command Code Present = 0 represents that the command code is present in the sensing measurement setup termination frame. As another example, Reason Code Present = 1 represents that the reason code is present in the sensing measurement setup termination frame, and Reason Code Present = 0 represents that the reason code is not present in the sensing measurement setup termination frame. Alternatively, Reason Code Present = 1 represents that the reason code is not present in the sensing measurement setup termination frame, and Reason Code Present = 0 represents that the reason code is present in the sensing measurement setup termination frame.

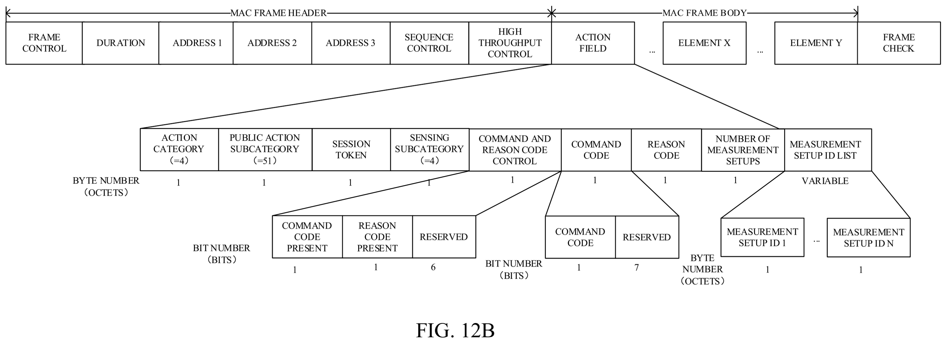

FIG. 12B is a schematic diagram of another frame structure of a sensing measurement setup termination frame according to embodiments of the present disclosure. Unlike FIG. 12A, the measurement setup termination frame format illustrated in FIG. 12B may indicate to terminate one or more measurement setups.

For example, the sensing measurement setup termination frame further includes at least one of: a number-of-measurement setups field for indicating the quantity of sensing measurement setups to be terminated; or a measurement setup ID list field for carrying IDs of one or more sensing measurement setups.

The measurement setup ID list field includes one or more measurement setup ID fields, and each of the one or more measurement setup ID fields carries an ID of one sensing measurement setup.

As illustrated in FIG. 12B, the number-of-measurement setups field may be a number-of-measurement setups field; and the measurement setup ID list subfield may be a measurement setup ID list field. The measurement setup ID list field may include one or more measurement setup ID subfields, and each measurement setup ID subfield carries an ID of one sensing measurement setup to be terminated.

The quantity of measurement setup ID subfields included in the measurement setup ID list field is indicated by the number-of-measurement setups field. For example, in FIG. 12B, a value of the number-of-measurement setups field is set to *N*, the measurement setup ID list field includes N measurement setup ID subfields.

Other contents in the frame structure as illustrated in FIG. 12B are the same as in FIG. 12A, which is not repeated herein.

In conjunction with the sensing measurement setup termination request frame and the sensing measurement setup termination frame, several specific examples are given below.

### Example 1:

The sensing initiator actively transmits the sensing measurement setup termination frame, the sensing measurement setup termination frame may carry the Command Code, and the Command Code indicates to terminate the sensing measurement setup. Alternatively, the sensing measurement setup termination frame may not carry the Command Code, and terminating the sensing measurement setup is indicated once the sensing measurement setup termination frame is transmitted.

If the Command Code indicates to terminate the sensing measurement setup, the sensing measurement setup termination frame may carry the Reason Code, and the Reason Code indicates the reason for terminating the sensing measurement setup. Alternatively, the sensing measurement setup termination frame may not carry the Reason Code, and the reason for terminating the sensing measurement setup does not need to be indicated.

### Example 2.1:

The STA, as the sensing responder, transmits the sensing measurement setup termination request frame, and the sensing measurement setup termination request frame may carry the Reason Code for indicating the reason for requesting to terminate the sensing measurement setup. Alternatively, the sensing measurement setup termination request frame may not carry the Reason Code, and the reason for requesting to terminate the sensing measurement setup does not need to be indicated.

The AP serves as the sensing initiator, the sensing measurement setup termination frame that the AP replies with may include the Command Code, and the Command Code indicates to terminate the sensing measurement setup. Alternatively, the sensing measurement setup termination frame that the AP replies with may not include the Command Code, and terminating the sensing measurement setup is indicated once the sensing measurement setup termination frame is transmitted.

The sensing measurement setup termination frame that the AP replies with may not include the Reason Code.

In some implementations, the AP is not allowed to reject a sensing measurement setup termination request from the STA when serving as the sensing initiator.

### Example 2.2:

The AP, as the sensing responder, transmits the sensing measurement setup termination request frame, and the sensing measurement setup termination request frame may carry the Reason Code for indicating the reason for requesting to terminate the sensing measurement setup. Alternatively, the sensing measurement setup termination request frame may not carry the Reason Code, and the reason for requesting to terminate the sensing measurement setup does not need to be indicated.

The STA serves as the sensing initiator, the sensing measurement setup termination frame that the STA replies with may include the Command Code, and the Command Code indicates to terminate the sensing measurement setup. Alternatively, the sensing measurement setup termination frame that the STA replies with may not include the Command Code, and terminating the sensing measurement setup is indicated once the sensing measurement setup termination frame is transmitted.

The sensing measurement setup termination frame that the STA replies with may not include the Reason Code.

In some implementations, the STA can accept or reject the sensing measurement setup termination request from the AP when serving as the sensing initiator.

### Example 3:

The sensing responder actively transmits the sensing measurement setup termination frame, the sensing measurement setup termination frame may carry the Command Code, and the Command Code indicates to terminate the sensing measurement setup. Alternatively, the sensing measurement setup termination frame may not carry the Command Code, and terminating the sensing measurement setup is indicated once the sensing measurement setup termination frame is transmitted.

If the Command Code indicates to terminate the sensing measurement setup, the sensing measurement setup termination frame may carry the Reason Code, and the Reason Code indicates the reason for terminating the sensing measurement setup. Alternatively, the sensing measurement setup termination frame may not carry the Reason Code, and the reason for terminating the sensing measurement setup does not need to be indicated.

The above describes the method for terminating the sensing measurement setup termination according to embodiments of the present disclosure. Embodiments of the present disclosure propose the solution of initiating the sensing measurement setup termination by different roles and design the related restriction rules, such that the sensing measurement setup can be terminated more flexibly and reasonably.

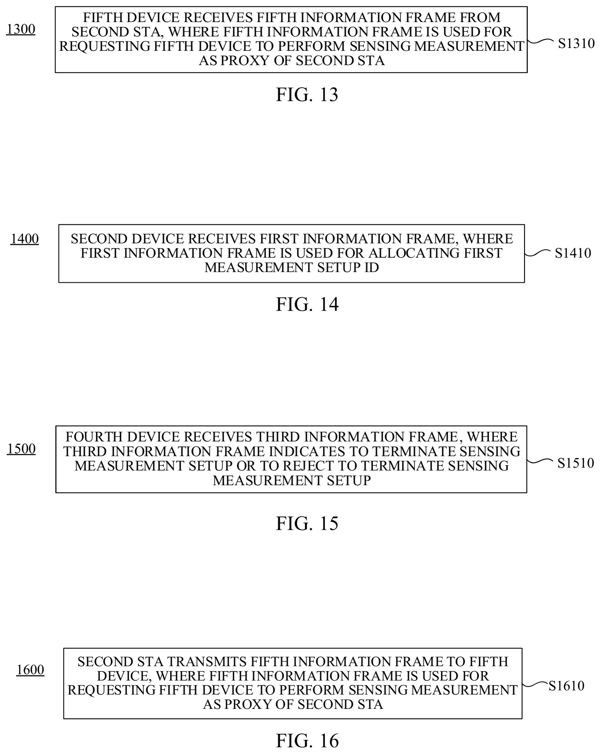

Embodiments of the present disclosure further propose another communication method. FIG. 13 is a flowchart for implementing another communication method 1300 according to embodiments of the present disclosure. The method 1300 includes the following.

At S1310: a fifth device receives a fifth information frame from a second STA, where the fifth information frame is used for requesting the fifth device to perform a sensing measurement as a proxy of the second STA.

For example, the fifth information frame is used for requesting the fifth device as the proxy of the second STA to perform the sensing measurement with another sensing responder.

The fifth device may be an AP.

The fifth information frame may include an SBP request frame, and the SBP request frame may include at least one of: a measurement instance period subfield for carrying a measurement period to perform sensing by the first device as a proxy being requested; a measurement instance duration subfield for carrying a measurement duration to perform sensing by the first device as a proxy being requested; a CSI-based measurement result subfield for indicating whether a sensing measurement result type required for performing sensing by the first device as a proxy being requested is CSI information; a beam SNR-based measurement result subfield for indicating whether the sensing measurement result type required for performing sensing by the first device as a proxy being requested is beam SNR information; a number-of-responders field for indicating the quantity of sensing responders participating in a measurement setup and performing the sensing measurement; a responder information list present subfield for indicating whether the SBP request frame includes a responder information list; or a responder information list field for carrying information of one or more sensing responders.

In some implementations, the responder information list field includes AID/UID subfields of one or more responders, and the AID/UID subfield of each of the responders carries an AID and/or UID of one sensing responder.

In some implementations, the quantity of AID/UID subfields of the responders included in the responder information list field is indicated by the number-of-responders field.

The specific frame structure of the SBP request frame is described in the implementation for allocating the measurement setup ID, which will not be repeated herein.

In some implementations, the method may further include that the fifth device transmits a sensing measurement setup request frame to another STA.

FIG. 14 is a flowchart for implementing another communication method 1400 according to embodiments of the present disclosure. The method 1400 includes the following.

At S1410: a second device receives a first information frame, where the first information frame is used for allocating a first measurement setup ID.

In some implementations, the first information frame includes the sensing measurement setup request frame.

In some implementations, the sensing measurement setup request frame is received from a first device by the second device. A role of the first device is a sensing initiator, and a role of the second device is a sensing responder. The role of the first device and/or the role of the second device are determined during a sensing measurement setup.

In some implementations, the role of the first device and/or the role of the second device are variable in a single sensing session. Alternatively, the role of the first device and/or the role of the second device are determined during a sensing session setup.

In some implementations, the role of the first device and/or the role of the second device are invariable in the single sensing session.

Specifically, the role of the first device and/or the role of the second device being determined during the sensing session setup includes the following. In a case where an initial sensing session is terminated and a current sensing session is established, the role of the first device and/or the role of the second device are determined during a sensing session setup of the current sensing session, where the initial sensing session is a sensing session prior to the current sensing session.

In some implementations, in the initial sensing session, the role of the first device is the sensing responder, and the role of the second device is the sensing initiator.

In some implementations, the sensing measurement setup request frame includes a first indication subfield and/or a first measurement setup ID subfield. The first indication subfield indicates whether the sensing measurement setup request frame includes the first measurement setup ID subfield. The first measurement setup ID subfield carries the first measurement setup ID.

In some implementations, the sensing measurement setup request frame further includes a subfield for carrying a MAC address of the first device and/or a subfield for carrying an AID and/or UID of the first device, where the first device is a device that transmits the sensing measurement setup request frame.

In some implementations, the sensing measurement setup request frame includes a subfield for indicating whether the sensing responder is allowed to initiate a sensing measurement setup termination.

In some implementations, the method may further include that the second device transmits a sensing measurement setup response frame.

In some implementations, the sensing measurement setup response frame includes a second indication subfield. The second indication subfield carries indication information indicating that the sensing measurement setup response frame does not include a second measurement setup ID field.

In other implementations, the first information frame comprises the sensing measurement setup response frame.

In some implementations, the sensing measurement setup response frame is received from the first device by the second device. The role of the first device is the sensing responder, and the role of the second device is the sensing initiator. The role of the first device and/or the role of the second device are determined during the sensing measurement setup.

In some implementations, the role of the first device and/or the role of the second device are variable in the single sensing session. Alternatively, the role of the first device and/or the role of the second device are determined during the sensing session setup.

In some implementations, the role of the first device and/or the role of the second device are invariable in the single sensing session.

In some implementations, the role of the first device and/or the role of the second device being determined during the sensing session setup includes the following. The role of the first device and/or the role of the second device are determined during the sensing session setup of the current sensing session in the case where the initial sensing session is terminated and the current sensing session is established, where the initial sensing session is the sensing session prior to the current sensing session.

In some implementations, in the initial sensing session, the role of the first device is the sensing initiator, and the role of the second device is the sensing responder.

In some implementations, the sensing measurement setup response frame includes a third indication subfield and/or a third measurement setup ID field. The third indication subfield indicates whether the sensing measurement setup response frame includes the third measurement setup ID field. The third measurement setup ID field carries the first measurement setup ID.

In some implementations, the sensing measurement setup response frame including the third indication subfield includes the following. The sensing measurement setup response frame includes a response control field, and the response control field includes the third indication subfield.

In some implementations, the method further includes that the second device transmits the sensing measurement setup request frame. For example, the second device transmits the sensing measurement setup request frame to the first device, and then receives the sensing measurement setup response frame from the first device.

In some implementations, the sensing measurement setup request frame includes a fourth indication subfield. The fourth indication subfield carries indication information indicating that the sensing measurement setup request frame does not include a fourth measurement setup ID field.

In some implementations, the method further includes that the second device uniquely identifies the measurement setup by using the first measurement setup ID.

In some embodiments, the method further includes that the second device uniquely identifies the measurement setup by using the first measurement setup ID and information of the first device, where the information of the first device includes at least one of the MAC address, the AID, or the UID of the first device.

In some implementations, the information of the first device is carried in a subfield for carrying the MAC address of the first device and/or a subfield for carrying the AID and/or UID of the first device in the sensing measurement setup request frame.

FIG. 15 is a flowchart for implementing another communication method 1500 according to embodiments of the present disclosure. The method 1500 includes the following.

At S1510: a fourth device receives a third information frame, where the third information frame indicates to terminate a sensing measurement setup or to reject to terminate the sensing measurement setup.

In some implementations, the third information frame includes a sensing measurement setup termination frame.

In some implementations, the sensing measurement setup termination frame includes at least one of: a fifth indication subfield for indicating whether the sensing measurement setup termination frame includes a command code subfield; a sixth indication subfield for indicating whether the sensing measurement setup termination frame includes a first reason code field; the command code subfield for indicating to terminate the sensing measurement setup or to reject to terminate the sensing measurement setup; or the first reason code field for carrying information of a reason for terminating the sensing measurement setup.

In some implementations, the sensing measurement setup termination frame further includes at least one of: a first number-of-measurement setups field for indicating the quantity of sensing measurement setups to be terminated; or a first measurement setup ID list field for carrying IDs of one or more sensing measurement setups.

In some implementations, the first measurement setup ID list field includes one or more first measurement setup ID subfields, and each of the one or more first measurement setup ID subfields carries an ID of one sensing measurement setup.

In some implementations, the quantity of the first measurement setup ID subfields included in the first measurement setup ID list field is indicated by the first number-of-measurement setups field.

In some implementations, the sensing measurement setup termination frame including the fifth indication subfield, the command code subfield, and/or the sixth indication subfield includes the following. The sensing measurement setup termination frame includes a command-and-reason code control field, and the command-and-reason code control field includes the fifth indication subfield and/or the sixth indication subfield.

In some embodiments, the reason for terminating the sensing measurement setup includes at least one of: an upper-layer application indicating to terminate the sensing measurement setup; or a sensing responder requesting to terminate the sensing measurement setup.

In some implementations, in a case where the third information frame indicates to terminate the sensing measurement setup, the method further includes that the fourth device transmits an acknowledgement message.

In some implementations, the method further includes that the fourth device transmits a fourth information frame, where the fourth information frame is used for requesting to terminate the sensing measurement setup.

In some implementations, the fourth information frame includes a sensing measurement setup termination request frame.

In some implementations, the sensing measurement setup termination request frame includes at least one of: a seventh indication subfield for indicating whether the sensing measurement setup termination request frame includes a second reason code field; or the second reason code field for carrying information of a reason for requesting to terminate the sensing measurement setup.

In some implementations, the sensing measurement setup termination request frame further includes at least one of: a second number-of-measurement setups field for indicating the quantity of sensing measurement setups requested to be terminated; or a second measurement setup ID list field for carrying IDs of one or more sensing measurement setups.

In some implementations, the second measurement setup ID list field includes one or more second measurement setup ID subfields, and each of the one or more second measurement setup ID subfields carries an ID of one sensing measurement setup.

In some implementations, the quantity of the second measurement setup ID subfields included in the second measurement setup ID list field is indicated by the second number-of-measurement setups field.

In some implementations, the sensing measurement setup termination request frame including the seventh indication subfield includes the following. The sensing measurement setup termination request frame includes a control field, and the control field includes the seventh indication subfield.

In some implementations, the reason for requesting to terminate the sensing measurement setup includes at least one of: the sensing responder being in low power, the sensing responder having a lot of cached uplink data to transmit; or the sensing responder being to start P2P communication.

In some implementations, a role of the fourth device is the sensing responder or the sensing initiator.

In some implementations, the fourth device is the AP or the STA.

In some implementations, the fourth device transmitting the fourth information frame includes the following. The fourth device transmits the sensing measurement setup termination request frame to the third device. The role of the third device is the sensing initiator, and the role of the fourth device is the sensing responder.

In some implementations, the third device is the AP and the fourth device is the STA, and the sensing measurement setup termination request from the fourth device is not allowed to be rejected.

In some implementations, the third device is the STA and the fourth device is the AP, and the sensing measurement setup termination request from the fourth device may be accepted or rejected.

In some implementations, in a case where the sensing responder can initiate a termination of the sensing measurement setup by default, the fourth information frame is transmitted by the fourth device before the third information frame is received.

In some implementations, in a case where the first sensing measurement setup is pre-set to have a termination initiated by the sensing responder, the fourth information frame is transmitted by the fourth device before the third information frame is received. The first sensing measurement setup is a sensing measurement setup for which a termination or a rejection of the termination is indicated by the third information frame.

In some implementations, the first sensing measurement setup being pre-set to have the termination initiated by the sensing responder includes the following. The sensing measurement setup request frame for establishing the first sensing measurement setup carries indication information indicating that the sensing responder is allowed to initiate the sensing measurement setup termination.

In some implementations, the sensing measurement setup request frame for establishing the first sensing measurement setup carrying the indication information indicating that the sensing responder is allowed to initiate the sensing measurement setup termination includes the following. The sensing measurement setup request frame for establishing the first sensing measurement setup includes a subfield for indicating whether the sensing responder is allowed to initiate the sensing measurement setup termination. The subfield for indicating whether the sensing responder is allowed to initiate the sensing measurement setup termination carries the indication information indicating that the sensing responder is allowed to initiate the sensing measurement setup termination.

FIG. 16 is a flowchart for implementing another communication method 1600 according to embodiments of the present disclosure. The method 1600 includes the following.

At S1610: a second STA transmits a fifth information frame to a fifth device, where the fifth information frame is used for requesting the fifth device to perform a sensing measurement as a proxy of the second STA.

In some implementations, the fifth device is an AP device.

In some implementations, the fifth information frame includes an SBP request frame, and the SBP request frame includes at least one of: a measurement instance period subfield for carrying a measurement period to perform sensing by the first device as a proxy being requested; a measurement instance duration subfield for carrying a measurement duration to perform sensing by the first device as a proxy being requested; a CSI-based measurement result subfield for indicating whether a sensing measurement result type required for performing sensing by the first device as a proxy being requested is CSI information; a beam SNR-based measurement result subfield for indicating whether the sensing measurement result type required for performing sensing by the first device as a proxy being requested is beam SNR information; a number-of-responders field for indicating the quantity of sensing responders participating in a measurement setup and performing the sensing measurement; a responder information list present subfield for indicating whether the SBP request frame includes a responder information list; or a responder information list field for carrying information of one or more sensing responders.

In some implementations, the responder information list field includes AID/UID subfields of one or more responders, and the AID/UID subfield of each of the responders carries one AID and/or UID of the sensing responder.

In some implementations, the quantity of AID/UID subfields of the responders included in the responder information list field is indicated by the number-of-responders field.

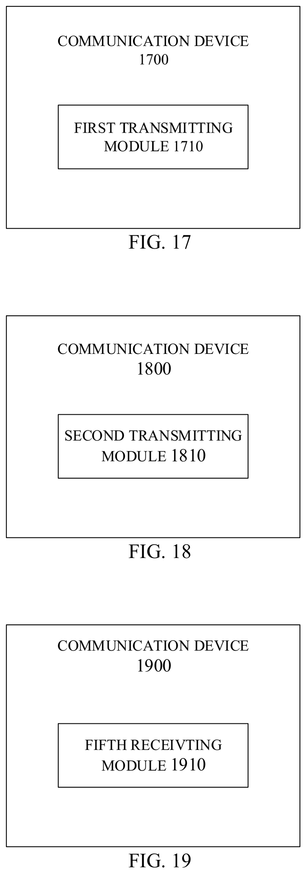

Embodiments of the present disclosure further propose a communication device. FIG. 17 is a schematic structural diagram of a communication device 1700 according to embodiments of the present disclosure. The communication device 1700 includes a first transmitting module 1710. The first transmitting module 1710 is configured to transmit a first information frame, where the first information frame is used for allocating a first measurement setup ID.

In some implementations, the first information frame includes a sensing measurement setup request frame.

In some implementations, the communication device is a first device, and the first transmitting module 1710 is configured to transmit the sensing measurement setup request frame to a second device. A role of the first device is a sensing initiator, and a role of the second device is a sensing responder. The role of the first device and/or the role of the second device are determined during a sensing measurement setup.

In some implementations, the role of the first device and/or the role of the second device are variable in a single sensing session.

In some implementations, the first transmitting module 1710 is configured to transmit the first information frame to the second device. The role of the first device is the sensing initiator, and the role of the second device is the sensing responder. The role of the first device and/or the role of the second device are determined during a sensing session setup.

In some implementations, the role of the first device and/or the role of the second device are invariable in the single sensing session.

In some implementations, the role of the first device and/or the role of the second device being determined during the sensing session setup includes the following. In a case where an initial sensing session is terminated and a current sensing session is established, the role of the first device and/or the role of the second device are determined during a sensing session setup of the current sensing session, where the initial sensing session is a sensing session prior to the current sensing session.

In some implementations, in the initial sensing session, the role of the first device is the sensing responder, and the role of the second device is the sensing initiator.

In some implementations, the sensing measurement setup request frame includes a first indication subfield and/or a first measurement setup ID subfield. The first indication subfield indicates whether the sensing measurement setup request frame includes the first measurement setup ID subfield. The first measurement setup ID subfield carries the first measurement setup ID.

In some implementations, the sensing measurement setup request frame further includes a subfield for carrying a MAC address of the first device, and/or a subfield for carrying an AID and/or UID of the first device.

In some implementations, the sensing measurement setup request frame includes a subfield for indicating whether the sensing responder is allowed to initiate a sensing measurement setup termination.

In some implementations, the communication device further includes a first receiving module. The first receiving module is configured to receive a sensing measurement setup response frame.

In some implementations, the sensing measurement setup response frame includes a second indication subfield. The second indication subfield carries indication information indicating that the sensing measurement setup response frame does not include a second measurement setup ID field.

In some implementations, the first information frame includes the sensing measurement setup response frame.

In some implementations, the first transmitting module 1710 is configured to transmit the sensing measurement setup response frame to the second device. The role of the first device is the sensing responder, and the role of the second device is the sensing initiator. The role of the first device and/or the role of the second device are determined during the sensing measurement setup.

In some implementations, the role of the first device and/or the role of the second device are variable in a single sensing session.

In some implementations, the first device transmits the sensing measurement setup response frame to the second device. The role of the first device is the sensing responder, and the role of the second device is the sensing initiator. The role of the first device and/or the role of the second device are determined during the sensing session setup.

In some implementations, the role of the first device and/or the role of the second device are invariable in the single sensing session.

In some implementations, the role of the first device and/or the role of the second device being determined during the sensing session setup includes the following. The role of the first device and/or the role of the second device are determined during the sensing session setup of the current sensing session in the case where the initial sensing session is terminated and the current sensing session is established, where the initial sensing session is the sensing session prior to the current sensing session.

In some implementations, in the initial sensing session, the role of the first device is the sensing initiator, and the role of the second device is the sensing responder.

In some implementations, the sensing measurement setup response frame includes a third indication subfield and/or a third measurement setup ID field. The third indication subfield indicates whether the sensing measurement setup response frame includes the third measurement setup ID field. The third measurement setup ID field carries the first measurement setup ID.

In some implementations, the sensing measurement setup response frame including the third indication subfield includes the following. The sensing measurement setup response frame includes a response control field, and the response control field includes the third indication subfield.

In some implementations, the communication device further includes a second receiving module. The second receiving module is configured to receive the sensing measurement setup request frame.

In some implementations, the sensing measurement setup request frame includes a fourth indication subfield. The fourth indication subfield carries indication information indicating that the sensing measurement setup request frame does not include a fourth measurement setup ID field.

In some implementations, the first measurement setup ID is used by the second device to uniquely identify a measurement setup. The second device is a device that receives the first information frame.

In some implementations, the first measurement setup ID and information of the first device are used by the second device to uniquely identify the measurement setup, where the second device is the device that receives the first information frame, and the information of the first device includes at least one of the MAC address, the AID, or the UID of the first device.

In some implementations, the information of the first device is carried in a subfield for carrying the MAC address of the first device and/or a subfield for carrying the AID and/or UID of the first device in the sensing measurement setup request frame.

In some implementations, the communication device further includes a third receiving module. The third receiving module is configured to receive a second information frame from a first STA, where the second information frame is used for requesting the first device to perform a sensing measurement as a proxy of the first STA.

In some implementations, the first device is the AP device or the STA.

In some implementations, a second information frame includes a SBP request frame, and the SBP request frame includes at least one of: a measurement instance period subfield for carrying a measurement period to perform sensing by the first device as a proxy being requested; a measurement instance duration subfield for carrying a measurement duration to perform sensing by the first device as a proxy being requested; a CSI-based measurement result subfield for indicating whether a sensing measurement result type required for performing sensing by the first device as a proxy being requested is CSI information; a beam SNR-based measurement result subfield for indicating whether the sensing measurement result type required for performing sensing by the first device as a proxy being requested is beam SNR information; a number-of-responders field for indicating the quantity of sensing responders participating in a measurement setup and performing a sensing measurement; a responder information list present subfield for indicating whether the SBP request frame includes a responder information list; or a responder information list field for carrying information of one or more sensing responders.

In some implementations, the responder information list field includes AID/UID subfields of one or more responders, and the AID/UID subfield of each of the responders carries an AID and/or UID of one sensing responder.

In some implementations, the quantity of AID/UID subfields of the responders included in the responder information list field is indicated by the number-of-responders field.

It may be understood that the foregoing and other operations and/or functions of the modules in the communication device according to embodiments of the present disclosure are respectively intended for implementing corresponding operations of the first device in the method 200 illustrated in FIG. 2, which will not be repeated herein for the sake of brevity.

Embodiments of the present disclosure further propose a communication device. FIG. 18 is a schematic structural diagram of a communication device 1800 according to embodiments of the present disclosure. The communication device 1800 includes a second transmitting module 1810. The second transmitting module 1810 is configured to transmit a third information frame, where the third information frame indicates to terminate a sensing measurement setup or to reject to terminate the sensing measurement setup.

In some implementations, the third information frame includes a sensing measurement setup termination frame.

In some implementations, the sensing measurement setup termination frame includes at least one of: a fifth indication subfield for indicating whether the sensing measurement setup termination frame includes a command code subfield; a sixth indication subfield for indicating whether the sensing measurement setup termination frame includes a first reason code field; the command code subfield for indicating to terminate the sensing measurement setup or to reject to terminate the sensing measurement setup; or the first reason code field for carrying information of a reason for terminating the sensing measurement setup.

In some implementations, the sensing measurement setup termination frame further includes at least one of: a first number-of-measurement setups field for indicating the quantity of sensing measurement setups to be terminated; or a first measurement setup ID list field for carrying IDs of one or more sensing measurement setups.

In some implementations, the first measurement setup ID list field includes one or more first measurement setup ID subfields, and each of the one or more first measurement setup ID subfields carries an ID of one sensing measurement setup.

In some implementations, the quantity of the first measurement setup ID subfields included in the first measurement setup ID list field is indicated by the first number-of-measurement setups field.

In some implementations, the sensing measurement setup termination frame including the fifth indication subfield, the command code subfield, and/or the sixth indication subfield includes the following. The sensing measurement setup termination frame includes a command-and-reason code control subfield, and the command-and-reason code control subfield includes the fifth indication subfield and/or the sixth indication subfield.

In some embodiments, the reason for terminating the sensing measurement setup includes at least one of: an upper-layer application indicating to terminate the sensing measurement setup; or a sensing responder requesting to terminate the sensing measurement setup.

In some embodiments, the communication device may further include a terminating module. In a case where the third information frame indicates to terminate the sensing measurement setup, the terminating module is configured to terminate a sensing measurement setup indicated by the third information frame. Alternatively, the communication device may further include a terminating module. The terminating module is configured to terminate a sensing measurement setup indicated by the third information frame after the third device receives an acknowledgement message in the case where the third information frame indicates to terminate the sensing measurement setup.

In some embodiments, the communication device may further include a fourth receiving module. The fourth receiving module is configured to a fourth information frame, where the fourth information frame is used for requesting to terminate the sensing measurement setup.

In some implementations, the fourth information frame includes a sensing measurement setup termination request frame.

In some implementations, the sensing measurement setup termination request frame includes at least one of: a seventh indication subfield for indicating whether the sensing measurement setup termination request frame includes a second reason code field; or the second reason code field for carrying information of a reason for requesting to terminate the sensing measurement setup.

In some implementations, the sensing measurement setup termination request frame further includes at least one of: a second number-of-measurement setups field for indicating the quantity of sensing measurement setups requested to be terminated; or a second measurement setup ID list field for carrying IDs of one or more sensing measurement setups.

In some implementations, the second measurement setup ID list field includes one or more second measurement setup ID subfields, and each of the one or more second measurement setup ID subfields carries an ID of one sensing measurement setup.

In some implementations, the quantity of the second measurement setup ID subfields included in the second measurement setup ID list field is indicated by the second number-of-measurement setups field.

In some implementations, the sensing measurement setup termination request frame including the seventh indication subfield includes the following. The sensing measurement setup termination request frame includes a control field, and the control field includes the seventh indication subfield.

In some implementations, the reason for requesting to terminate the sensing measurement setup includes at least one of: a sensing responder being in low power; the sensing responder having a lot of cached uplink data to transmit; or the sensing responder being to start P2P communication

The communication device may be the third device.

In some implementations, a role of the third device is a sensing initiator or a sensing responder.

In some implementations, the third device is an AP or an STA.

In some implementations, the fourth receiving module may be configured to receive the sensing measurement setup termination request frame from a fourth device. A role of the third device is the sensing initiator, and a role of the fourth device is the sensing responder

In some implementations, the third device is the AP and the fourth device is the STA, and the third device is not allowed to reject a sensing measurement setup termination request from the fourth device.

In some implementations, the third device is the STA and the fourth device is the AP, and the third device can accept or reject the sensing measurement setup termination request from the fourth device.

In some implementations, in a case where the sensing responder can initiate a termination of the sensing measurement setup by default, the fourth information frame is received by the fourth receiving module before the second transmitting module 1810 transmits the third information frame.

In some implementations, in a case where a first sensing measurement setup is pre-set to have a termination initiated by the sensing responder, the fourth information frame is received by the fourth receiving module before the second transmitting module 1810 transmits the third information frame. The first sensing measurement setup is a sensing measurement setup for which termination/rejection of termination is indicated by the third information frame.

In some implementations, the first sensing measurement setup being pre-set to have the termination initiated by the sensing responder includes the following. A sensing measurement setup request frame for establishing the first sensing measurement setup carries indication information indicating that the sensing responder is allowed to initiate a sensing measurement setup termination.

In some implementations, the sensing measurement setup request frame for establishing the first sensing measurement setup carrying the indication information indicating that the sensing responder is allowed to initiate the sensing measurement setup termination includes the following. The sensing measurement setup request frame for establishing the first sensing measurement setup includes a subfield for indicating whether the sensing responder is allowed to initiate the sensing measurement setup termination. The subfield for indicating whether the sensing responder is allowed to initiate the sensing measurement setup termination carries the indication information indicating that the sensing responder is allowed to initiate the sensing measurement setup termination.

It may be understood that the foregoing and other operations and/or functions of the modules in the communication device according to embodiments of the present disclosure are respectively intended for implementing corresponding operations of the third device in the method 800 illustrated in FIG. 8, which will not be repeated herein for the sake of brevity.

Embodiments of the present disclosure further propose a communication device. FIG. 19 is a schematic structural diagram of a communication device 1900 according to embodiments of the present disclosure. The communication device 1900 includes a fifth receiving module 1910. The fifth receiving module 1910 is configured to receive a fifth information frame from a second STA, where the fifth information frame is used for requesting the fifth device to perform a sensing measurement as a proxy of the second STA.

The communication device may be a fifth device.

In some implementations, the fifth device is an AP device.

In some implementations, the fifth information frame includes an SBP request frame, and the SBP request frame includes at least one of: a measurement instance period subfield for carrying a measurement period to perform sensing by the first device as a proxy being requested; a measurement instance duration subfield for carrying a measurement duration to perform sensing by the first device as a proxy being requested; a CSI-based measurement result subfield for indicating whether a sensing measurement result type required for performing sensing by the first device as a proxy being requested is CSI information; a beam SNR-based measurement result subfield for indicating whether the sensing measurement result type required for performing sensing by the first device as a proxy being requested is beam SNR information; a number-of-responders field for indicating the quantity of sensing responders participating in a measurement setup and performing the sensing measurement; a responder information list present subfield for indicating whether the SBP request frame includes a responder information list; or a responder information list field for carrying information of one or more sensing responders.

In some implementations, the responder information list field includes AID/UID subfields of one or more responders, and the AID/UID subfield of each of the responders carries an AID and/or UID of one sensing responder.

In some implementations, the quantity of AID/UID subfields of the responders included in the responder information list field is indicated by the number-of-responders field.

In some implementations, the communication device may further include a third transmitting module. The third transmitting module is configured to transmit a sensing measurement setup request frame to another STA.

It may be understood that the foregoing and other operations and/or functions of the modules in the communication device according to embodiments of the present disclosure are respectively intended for implementing corresponding operations of the fifth device in the method 1300 illustrated in FIG. 13, which will not be repeated herein for the sake of brevity.

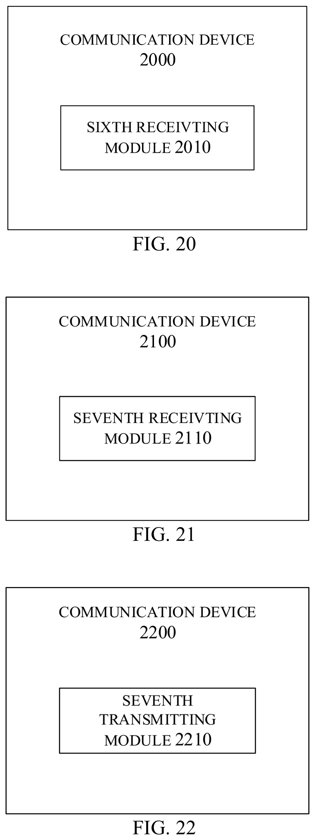

Embodiments of the present disclosure further propose a communication device. FIG. 20 is a schematic structural diagram of a communication device 2000 according to embodiments of the present disclosure. The communication device 2000 includes a sixth receiving module 2010. The sixth receiving module 2010 is configured to receive a first information frame, where the first information frame is used for allocating a first measurement setup ID.

In some implementations, the first information frame includes a sensing measurement setup request frame.

The communication device may be a second device.

In some implementations, the sixth receiving module 2010 is configured to receive the sensing measurement setup request frame from a first device. A role of the first device is a sensing initiator, and a role of the second device is a sensing responder. The role of the first device and/or the role of the second device are determined during a sensing measurement setup

In some implementations, the role of the first device and/or the role of the second device are variable in a single sensing session.

In some implementations, the sixth receiving module 2010 is configured to receive the first information frame from the first device. The role of the first device is the sensing initiator, and the role of the second device is the sensing responder. The role of the first device and/or the role of the second device are determined during a sensing session setup.

In some implementations, the role of the first device and/or the role of the second device are invariable in the single sensing session.

In some implementations, the role of the first device and/or the role of the second device being determined during the sensing session setup includes the following. In a case where an initial sensing session is terminated and a current sensing session is established, the role of the first device and/or the role of the second device are determined during a sensing session setup of the current sensing session, where the initial sensing session is a sensing session prior to the current sensing session.

In some implementations, in the initial sensing session, the role of the first device is the sensing responder, and the role of the second device is the sensing initiator.

In some implementations, the sensing measurement setup request frame includes a first indication subfield and/or a first measurement setup ID subfield. The first indication subfield indicates whether the sensing measurement setup request frame includes the first measurement setup ID subfield. The first measurement setup ID subfield carries the first measurement setup ID.

In some implementations, the sensing measurement setup request frame further includes a subfield for carrying a MAC address of the first device and/or a subfield for carrying an AID and/or UID of the first device, where the first device is a device that transmits the sensing measurement setup request frame.

In some implementations, the sensing measurement setup request frame includes a subfield for indicating whether a sensing responder is allowed to initiate a sensing measurement setup termination.

In some implementations, the communication device further includes a fourth transmitting module. The fourth transmitting module is configured to transmit a sensing measurement setup response frame.

In some implementations, the sensing measurement setup response frame includes a second indication subfield. The second indication subfield carries indication information indicating that the sensing measurement setup response frame does not include a second measurement setup ID field.

In some implementations, the first information frame includes the sensing measurement setup response frame.

In some implementations, the sixth receiving module 2010 is configured to receive the sensing measurement setup response frame from the first device. The role of the first device is the sensing responder, and the role of the second device is the sensing initiator. The role of the first device and/or the role of the second device are determined during the sensing measurement setup.

In some implementations, the role of the first device and/or the role of the second device are variable in the single sensing session. Alternatively, the role of the first device and/or the role of the second device are determined during the sensing session setup.

In some implementations, the role of the first device and/or the role of the second device are invariable in the single sensing session.

In some implementations, the role of the first device and/or the role of the second device being determined during the sensing session setup includes the following. The role of the first device and/or the role of the second device are determined during the sensing session setup of the current sensing session in the case where the initial sensing session is terminated and the current sensing session is established, where the initial sensing session is the sensing session prior to the current sensing session.

In some implementations, in the initial sensing session, the role of the first device is the sensing initiator, and the role of the second device is the sensing responder.

In some implementations, the sensing measurement setup response frame includes a third indication subfield and/or a third measurement setup ID field. The third indication subfield indicates whether the sensing measurement setup response frame includes the third measurement setup ID field. The third measurement setup ID field carries the first measurement setup ID.

In some implementations, the sensing measurement setup response frame including the third indication subfield includes the following. The sensing measurement setup response frame includes a response control field, and the response control field includes the third indication subfield.

In some implementations, the communication device further includes a fifth transmitting module. The fifth transmitting module is configured to transmit the sensing measurement setup request frame.

In some implementations, the sensing measurement setup request frame includes a fourth indication subfield. The fourth indication subfield carries indication information indicating that the sensing measurement setup request frame does not include a fourth measurement setup ID field.

In some implementations, the second device may uniquely identify a measurement setup by using the first measurement setup ID. Alternatively, the second device may uniquely identify the measurement setup by using the first measurement setup ID and information of the first device, where the information of the first device includes at least one of the MAC address, the AID, or the UID of the first device.

In some implementations, the information of the first device is carried in a subfield for carrying the MAC address of the first device and/or a subfield for carrying the AID and/or UID of the first device in the sensing measurement setup request frame.

It may be understood that the foregoing and other operations and/or functions of the modules in the communication device according to embodiments of the present disclosure are respectively intended for implementing corresponding operations of the second device in the method 1400 illustrated in FIG. 14, which will not be repeated herein for the sake of brevity.

Embodiments of the present disclosure further propose a communication device. FIG. 21 is a schematic structural diagram of a communication device 2100 according to embodiments of the present disclosure. The communication device 2100 includes a seventh receiving module 2110. The seventh receiving module 2110 is configured to receive a third information frame, where the third information frame indicates to terminate a sensing measurement setup or to reject to terminate the sensing measurement setup.

The communication device may be a fourth device.

In some implementations, the third information frame includes a sensing measurement setup termination frame.

In some implementations, the sensing measurement setup termination frame includes at least one of: a fifth indication subfield for indicating whether the sensing measurement setup termination frame includes a command code subfield; a sixth indication subfield for indicating whether the sensing measurement setup termination frame includes a first reason code field; the command code subfield for indicating to terminate the sensing measurement setup or to reject to terminate the sensing measurement setup; or the first reason code field for carrying information of a reason for terminating the sensing measurement setup.

In some implementations, the sensing measurement setup termination frame further includes at least one of: a first number-of-measurement setups field for indicating the quantity of sensing measurement setups to be terminated; or a first measurement setup ID list field for carrying IDs of one or more sensing measurement setups.

In some implementations, the first measurement setup ID list field includes one or more first measurement setup ID subfields, and each of the one or more first measurement setup ID subfields carries an ID of one sensing measurement setup.

In some implementations, the quantity of the first measurement setup ID subfields included in the first measurement setup ID list field is indicated by the first number-of-measurement setups field.

In some implementations, the sensing measurement setup termination frame including the fifth indication subfield, the command code subfield, and/or the sixth indication subfield includes the following. The sensing measurement setup termination frame includes a command-and-reason code control field, and the command-and-reason code control field includes the fifth indication subfield and/or the sixth indication subfield.

In some embodiments, the reason for terminating the sensing measurement setup includes at least one of: an upper-layer application indicating to terminate the sensing measurement setup; or a sensing responder requesting to terminate the sensing measurement setup.

In some embodiments, the communication device may further include an acknowledging module. The acknowledging module is configured to transmit an acknowledgement message in a case where the third information frame indicates to terminate the sensing measurement setup.

In some implementations, the communication device may further include a sixth transmitting module. The sixth transmitting module is configured to transmit a fourth information frame, where the fourth information frame is used for requesting to terminate the sensing measurement setup.

In some implementations, the fourth information frame includes a sensing measurement setup termination request frame.

In some implementations, the sensing measurement setup termination request frame includes at least one of: a seventh indication subfield for indicating whether the sensing measurement setup termination request frame includes a second reason code field; or the second reason code field for carrying information of a reason for requesting to terminate the sensing measurement setup.

In some implementations, the sensing measurement setup termination request frame further includes at least one of: a second number-of-measurement setups field for indicating the quantity of sensing measurement setups requested to be terminated; or a second measurement setup ID list field for carrying IDs of one or more sensing measurement setups.

In some implementations, the second measurement setup ID list field includes one or more second measurement setup ID subfields, and each of the one or more second measurement setup ID subfields carries an ID of one sensing measurement setup.

In some implementations, the quantity of the second measurement setup ID subfields included in the second measurement setup ID list field is indicated by the second number-of-measurement setups field.

In some implementations, the sensing measurement setup termination request frame including the seventh indication subfield includes the following. The sensing measurement setup termination request frame includes a control field, and the control field includes the seventh indication subfield.

In some implementations, the reason for requesting to terminate the sensing measurement setup includes at least one of: the sensing responder being in low power; the sensing responder having a lot of cached uplink data to transmit; or the sensing responder being to start P2P communication.

In some implementations, a role of the fourth device is the sensing responder or a sensing initiator.

In some implementations, the fourth device is an AP or an STA.

In some implementations, the sixth transmitting module is configured to transmit the sensing measurement setup termination request frame to a third device. A role of the third device is the sensing initiator, and the role of the fourth device is the sensing responder.

In some implementations, the third device is the AP and the fourth device is the STA, and a sensing measurement setup termination request from the fourth device is not allowed to be rejected.

In some implementations, the third device is the STA and the fourth device is the AP, and the sensing measurement setup termination request from the fourth device may be accepted or rejected.

In some implementations, in a case where the sensing responder can initiate a termination of the sensing measurement setup by default, the sixth transmitting module is configured to transmit the fourth information frame.

In some implementations, in a case where a first sensing measurement setup is pre-set to have a termination initiated by the sensing responder, the sixth transmitting module is configured to transmit the fourth information frame. The first sensing measurement setup is a sensing measurement setup for which termination/rejection of termination is indicated by the third information frame.

In some implementations, the first sensing measurement setup being pre-set to have the termination initiated by the sensing responder includes the following. The sensing measurement setup request frame for establishing the first sensing measurement setup carries indication information indicating that the sensing responder is allowed to initiate a sensing measurement setup termination.

In some implementations, the sensing measurement setup request frame for establishing the first sensing measurement setup carrying the indication information indicating that the sensing responder is allowed to initiate the sensing measurement setup termination includes the following. The sensing measurement setup request frame for establishing the first sensing measurement setup includes a subfield for indicating whether the sensing responder is allowed to initiate the sensing measurement setup termination. The subfield for indicating whether the sensing responder is allowed to initiate the sensing measurement setup termination carries the indication information indicating that the sensing responder is allowed to initiate the sensing measurement setup termination.

It may be understood that the foregoing and other operations and/or functions of the modules in the communication device according to embodiments of the present disclosure are respectively intended for implementing corresponding operations of the fourth device in the method 1500 illustrated in FIG. 15, which will not be repeated herein for the sake of brevity.

Embodiments of the present disclosure further propose a communication device. FIG. 22 is a schematic structural diagram of a communication device 2200 according to embodiments of the present disclosure. The communication device 2200 includes a seventh transmitting module 2210. The seventh transmitting module 2210 is configured to transmit a fifth information frame to a fifth device, where the fifth information frame is used for requesting the fifth device to perform a sensing measurement as a proxy of the communication device.

The communication device may be an AP device.

In some implementations, the fifth information frame includes a SBP request frame, and the SBP request frame includes at least one of: a measurement instance period subfield for carrying a measurement period to perform sensing by the first device as a proxy being requested; a measurement instance duration subfield for carrying a measurement duration to perform sensing by the first device as a proxy being requested; a CSI-based measurement result subfield for indicating whether a sensing measurement result type required for performing sensing by the first device as a proxy being requested is CSI information; a beam SNR-based measurement result subfield for indicating whether the sensing measurement result type required for performing sensing by the first device as a proxy being requested is beam SNR information; a number-of-responders field for indicating the quantity of sensing responders participating in a measurement setup and performing the sensing measurement; a responder information list present subfield for indicating whether the SBP request frame includes a responder information list; or a responder information list field for carrying information of one or more sensing responders.

In some implementations, the responder information list field includes AID/UID subfields of one or more responders, and the AID/UID subfield of each of the responders carries one AID and/or UID of the sensing responder.

In some implementations, the quantity of AID/UID subfields of the responders included in the responder information list field is indicated by the number-of-responders field.

It may be understood that the foregoing and other operations and/or functions of the modules in the communication device according to embodiments of the present disclosure are respectively intended for implementing corresponding operations of the second STA in the method 1600 illustrated in FIG. 16, which will not be repeated herein for the sake of brevity.

It may be noted that the functions of various modules (sub-modules, units, or assemblies, etc.) in the terminal device 100 described in embodiments of the present disclosure may be implemented by different modules (sub-modules, units, or assemblies, etc.), or may be implemented by the same module (sub-module, unit, or assembly, etc.). For example, the first receiving module and the second receiving module may be different modules or may be the same module, both of which can implement the corresponding functions thereof in embodiments of the present disclosure. In addition, the transmitting module and the receiving module in embodiments of the present disclosure may be implemented by a transceiver of a device, and some or all of the other modules may be implemented by a processor of the device.

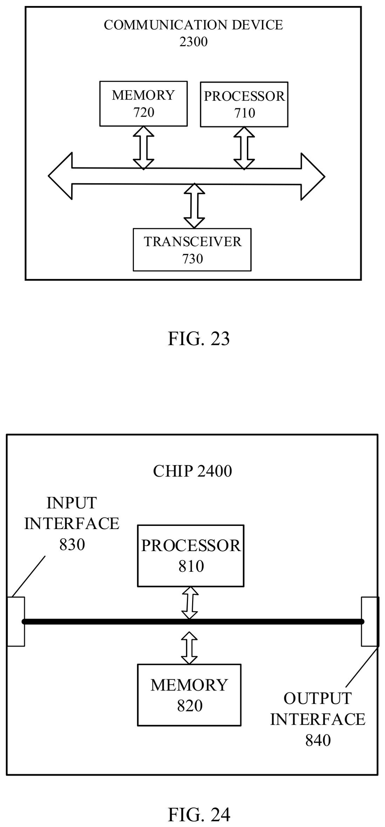

FIG. 23 is a schematic structural diagram of a communication device 2300 according to embodiments of the present disclosure. The communication device 2300 as illustrated in FIG. 23 may include a processor 710. The processor 710 can invoke and execute computer programs stored in a memory, to perform the method in embodiments of the present disclosure.

In some implementations, as illustrated in FIG. 23, the communication device 2300 may further include a memory 720. The processor 710 can invoke and execute computer programs stored in the memory 720, to perform the communication method in embodiments of the present disclosure. The memory 720 may be a separate device independent of the processor 710, or may be integrated into the processor 710.

In some implementations, as illustrated in FIG. 23, the communication device 2300 may further include a transceiver 730. The processor 710 can control the transceiver 730 to communicate with other devices, specifically, to transmit information or data to other devices or to receive information or data transmitted by other devices. The transceiver 730 may include a transmitter and a receiver. The transceiver 730 may further include an antenna, where one or more antennas may be provided.

In some implementations, the communication device 2300 may be operable as the communication device in embodiments of the present disclosure, and the communication device 2300 can implement the operations performed by the communication device in various methods in embodiments of the present disclosure, which will not be repeated herein for the sake of simplicity.

FIG. 24 is a schematic structural diagram of a chip 2400 according to embodiments of the present disclosure. The chip 2400 illustrated in FIG. 24 may include a processor 810. The processor 810 can invoke and execute computer programs stored in a memory, to perform the method in embodiments of the present disclosure.

In some implementations, as illustrated in FIG. 24, the chip 2400 may further include a memory 820. The processor 810 can invoke and execute computer programs stored in the memory 820, to perform the method in embodiments of the present disclosure. The memory 820 may be a separate device independent of the processor 810, or may be integrated into the processor 810.

In some implementations, the chip 2400 may further include an input interface 830. The processor 810 can control the input interface 830 to communicate with other devices or chips, specifically, to obtain information or data transmitted by other devices or chips.

In some implementations, the chip 2400 may further include an output interface 840. The processor 810 can control the output interface 840 to communicate with other devices or chips, specifically, to output information or data to other devices or chips.

In some implementations, the chip may be applied to the communication device in embodiments of the present disclosure. The chip can implement the operations performed by the communication device in various methods in embodiments of the present disclosure, which will not be repeated herein for the sake of simplicity.

It may be understood that the chip in embodiments of the present disclosure may also be referred to as a system-on-chip (SOC).

The processor may be a general-purpose processor, a digital signal processor (DSP), a field programmable gate array (FPGA), an application-specific integrated circuit (ASIC), or other programmable logic devices, transistor logic devices, discrete hardware components, or the like. The general-purpose processor may be a microprocessor, any conventional processor, or the like.

The memory may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM).

It may be understood that the memory above is intended for illustration rather than limitation. For example, the memory in embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), a direct rambus RAM (DR RAM), etc. In other words, the memory in embodiments of the present disclosure is intended to include, but is not limited to, these and any other suitable types of memory.

All or some of the above embodiments may be implemented through software, hardware, firmware, or any other combination thereof. When implemented by software, all or some of the above embodiments may be implemented in the form of a computer program product. The computer program product includes one or more computer instructions. When the computer instructions are applied and executed on a computer, all or some of the operations or functions of the embodiments of the present disclosure are performed. The computer may be a general-purpose computer, a special-purpose computer, a computer network, or other programmable apparatuses. The computer instruction may be stored in a computer-readable storage medium, or transmitted from one computer-readable storage medium to another computer-readable storage medium. For example, the computer instruction may be transmitted from one website, computer, server, or data center to another website, computer, server, or data center in a wired manner or a wireless manner. Examples of the wired manner may be a coaxial cable, an optical fiber, a digital subscriber line (DSL), etc. The wireless manner may be, for example, infrared, wireless, microwave, etc. The computer-readable storage medium may be any computer-accessible usable medium or a data storage device such as a server, a data center, or the like that integrates one or more usable media. The usable medium may be a magnetic medium (such as a soft disk, a hard disk, or a magnetic tape), an optical medium (such as a digital video disc (DVD)), or a semiconductor medium (such as a solid state disk (SSD)), etc.

It may also be understood that, in various method embodiments of the present disclosure, the magnitude of a sequence number of each of the foregoing processes does not mean an execution order, and an execution order of each process may be determined according to a function and an internal logic of the process, which shall not constitute any limitation to an implementation process of embodiments of the present disclosure.

It will be evident to those skilled in the art that, for the sake of convenience and simplicity, in terms of the specific working processes of the foregoing systems, apparatuses, and units, reference may be made to the corresponding processes in the foregoing method embodiments, which will not be repeated herein.

The following numbered clauses, describing aspects of the disclosure, are part of the description.
1. A communication method, comprising: transmitting, by a first device, a first information frame, wherein the first information frame is used for allocating a first measurement setup ID.
2. The method of clause 1, wherein the first information frame comprises a sensing measurement setup request frame.
3. The method of clause 2, wherein
   the sensing measurement setup request frame is transmitted to a second device by the first device;
   a role of the first device is a sensing initiator, and a role of the second device is a sensing responder; and
   the role of the first device and/or the role of the second device are determined during a sensing measurement setup.
4. The method of clause 3, wherein the role of the first device and/or the role of the second device are variable in a single sensing session.
5. The method of clause 2, wherein
   the first information frame is transmitted to a second device by the first device;
   a role of the first device is a sensing initiator, and a role of the second device is a sensing responder; and
   the role of the first device and/or the role of the second device are determined during a sensing session setup.
6. The method of clause 5, wherein the role of the first device and/or the role of the second device are invariable in a single sensing session.
7. The method of clause 5 or 6, wherein the role of the first device and/or the role of the second device being determined during the sensing session setup comprises:
   in a case where an initial sensing session is terminated and a current sensing session is established, the role of the first device and/or the role of the second device are determined during a sensing session setup of the current sensing session, wherein the initial sensing session is a sensing session prior to the current sensing session.
8. The method of clause 7, wherein
   in the initial sensing session, the role of the first device is the sensing responder, and the role of the second device is the sensing initiator.
9. The method of any one of clauses 2 to 8, wherein the sensing measurement setup request frame comprises a first indication subfield and/or a first measurement setup ID subfield, wherein
   the first indication subfield indicates whether the sensing measurement setup request frame comprises the first measurement setup ID subfield; and
   the first measurement setup ID subfield carries the first measurement setup ID.
10. The method of clause 9, wherein the sensing measurement setup request frame further comprises:
   a subfield for carrying a medium access control (MAC) address of the first device; and/or
   a subfield for carrying an association identifier (AID) and/or unassociation identifier (UID) of the first device.
11. The method of any one of clauses 2 to 10, wherein the sensing measurement setup request frame comprises a subfield for indicating whether a sensing responder is allowed to initiate a sensing measurement setup termination.
12. The method of any one of clauses 1 to 11, further comprising:
   receiving, by the first device, a sensing measurement setup response frame.
13. The method of clause 12, wherein the sensing measurement setup response frame comprises a second indication subfield, wherein
   the second indication subfield carries indication information indicating that the sensing measurement setup response frame does not comprise a second measurement setup ID field.
14. The method of clause 1, wherein the first information frame comprises a sensing measurement setup response frame.
15. The method of clause 14, wherein
   the sensing measurement setup response frame is transmitted to a second device by the first device;
   a role of the first device is a sensing responder, and a role of the second device is a sensing initiator; and
   the role of the first device and/or the role of the second device are determined during a sensing measurement setup.
16. The method of clause 15, wherein the role of the first device and/or the role of the second device are variable in a single sensing session.
17. The method of clause 14, wherein
   the sensing measurement setup response frame is transmitted to a second device by the first device;
   a role of the first device is a sensing responder, and a role of the second device is a sensing initiator; and
   the role of the first device and/or the role of the second device are determined during a sensing session setup.
18. The method of clause 17, wherein the role of the first device and/or the role of the second device are invariable in a single sensing session.
19. The method of clause 17 or 18, wherein the role of the first device and/or the role of the second device being determined during the sensing session setup comprises:
   in a case where an initial sensing session is terminated and a current sensing session is established, the role of the first device and/or the role of the second device are determined during a sensing session setup of the current sensing session, wherein the initial sensing session is a sensing session prior to the current sensing session.
20. The method of clause 19, wherein
   in the initial sensing session, the role of the first device is the sensing initiator, and the role of the second device is the sensing responder.
21. The method of any one of clauses 14 to 20, wherein the sensing measurement setup response frame comprises a third indication subfield and/or a third measurement setup ID field, wherein
   the third indication subfield indicates whether the sensing measurement setup response frame comprises the third measurement setup ID field; and
   the third measurement setup ID field carries the first measurement setup ID.
22. The method of clause 21, wherein the sensing measurement setup response frame comprising the third indication subfield comprises:
   the sensing measurement setup response frame comprises a response control field, and the response control field comprises the third indication subfield.
23. The method of any one of clauses 14 to 22, further comprising:
   receiving, by the first device, a sensing measurement setup request frame.
24. The method of clause 23, wherein the sensing measurement setup request frame comprises a fourth indication subfield, wherein
   the fourth indication subfield carries indication information indicating that the sensing measurement setup request frame does not comprise a fourth measurement setup ID field.
25. The method of clause 24, wherein the first device is an access point (AP) or a station (STA).
26. The method of any one of clauses 1 to 25, wherein
   the first measurement setup ID is used by a second device to uniquely identify a measurement setup, wherein the second device comprises a device that receives the first information frame.
27. The method of any one of clauses 1 to 26, wherein
   the first measurement setup ID and information of the first device are used by a second device to uniquely identify a measurement setup, wherein the second device comprises a device that receives the first information frame, and the information of the first device comprises at least one of a MAC address, an AID, or a UID of the first device.
28. The method of clause 27, wherein the information of the first device is carried in a subfield for carrying the MAC address of the first device and/or a subfield for carrying the AID and/or UID of the first device in a sensing measurement setup request frame.
29. The method of any one of clauses 1 to 28, further comprising:
   receiving, by the first device, a second information frame from a first STA, wherein the second information frame is used for requesting the first device to perform a sensing measurement as a proxy of the first STA.
30. The method of clause 28 or 29, wherein a second information frame comprises a sensing by proxy (SBP) request frame, wherein the SBP request frame comprises at least one of:
   a measurement instance period subfield for carrying a measurement period to perform sensing by the first device as a proxy being requested;
   a measurement instance duration subfield for carrying a measurement duration to perform sensing by the first device as a proxy being requested;
   a channel state information (CSI)-based measurement result subfield for indicating whether a sensing measurement result type required for performing sensing by the first device as a proxy being requested is CSI information;
   a beam signal-to-noise ratio (SNR)-based measurement result subfield for indicating whether the sensing measurement result type required for performing sensing by the first device as a proxy being requested is beam SNR information;
   a number-of-responders field for indicating the quantity of sensing responders participating in a measurement setup and performing a sensing measurement;
   a responder information list present subfield for indicating whether the SBP request frame comprises a responder information list; or
   a responder information list field for carrying information of one or more sensing responders.
31. The method of clause 30, wherein the responder information list field comprises AID/UID subfields of one or more responders, and the AID/UID subfield of each of the responders carries an AID and/or UID of one sensing responder.
32. The method of clause 31, wherein the quantity of AID/UID subfields of the responders comprised in the responder information list field is indicated by the number-of-responders field.
33. A communication method, comprising:
   transmitting, by a third device, a third information frame, wherein the third information frame indicates to terminate a sensing measurement setup or to reject to terminate the sensing measurement setup.
34. The method of clause 33, wherein the third information frame comprises a sensing measurement setup termination frame.
35. The method of clause 34, wherein the sensing measurement setup termination frame comprises at least one of:
   a fifth indication subfield for indicating whether the sensing measurement setup termination frame comprises a command code subfield;
   a sixth indication subfield for indicating whether the sensing measurement setup termination frame comprises a first reason code field;
   the command code subfield for indicating to terminate the sensing measurement setup or to reject to terminate the sensing measurement setup the termination; or
   the first reason code field for carrying information of a reason for terminating the sensing measurement setup.
36. The method of clause 35, wherein the sensing measurement setup termination frame further comprises at least one of:
   a first number-of-measurement setups field for indicating the quantity of sensing measurement setups to be terminated; or
   a first measurement setup ID list field for carrying IDs of one or more sensing measurement setups.
37. The method of clause 36, wherein the first measurement setup ID list field comprises one or more first measurement setup ID subfields, and each of the one or more first measurement setup ID subfields carries an ID of one sensing measurement setup.
38. The method of clause 37, wherein the quantity of the first measurement setup ID subfields comprised in the first measurement setup ID list field is indicated by the first number-of-measurement setups field.
39. The method of any one of clauses 35 to 38, wherein the sensing measurement setup termination frame comprising the fifth indication subfield, the command code subfield, and/or the sixth indication subfield comprises:
   the sensing measurement setup termination frame comprises a command-and-reason code control field, and the command-and-reason code control field comprises the fifth indication subfield and/or the sixth indication subfield.
40. The method of any one of clauses 35 to 39, wherein the reason for terminating the sensing measurement setup comprises at least one of:
   an upper-layer application indicates to terminate the sensing measurement setup; or
   a sensing responder requests to terminate the sensing measurement setup.
41. The method of any one of clauses 33 to 40, wherein in a case where the third information frame indicates to terminate the sensing measurement setup, the method further comprises:
   terminating, by the third device, a sensing measurement setup indicated by the third information frame.
42. The method of any one of clauses 33 to 40, wherein in a case where the third information frame indicates to terminate the sensing measurement setup, the method further comprises:
   terminating, by the third device, a sensing measurement setup indicated by the third information frame after the third device receives an acknowledgement message.
43. The method of any one of clauses 33 to 42, further comprising:
   receiving, by the third device, a fourth information frame, wherein the fourth information frame is used for requesting to terminate the sensing measurement setup.
44. The method of clause 43, wherein the fourth information frame comprises a sensing measurement setup termination request frame.
45. The method of clause 44, wherein the sensing measurement setup termination request frame comprises at least one of:
   a seventh indication subfield for indicating whether the sensing measurement setup termination request frame comprises a second reason code field; or
   the second reason code field for carrying information of a reason for requesting to terminate the sensing measurement setup.
46. The method of clause 45, wherein the sensing measurement setup termination request frame further comprises at least one of:
   a second number-of-measurement setups field for indicating the quantity of the sensing measurement setups requested to be terminated; or
   a second measurement setup ID list field for carrying IDs of one or more sensing measurement setups.
47. The method of clause 46, wherein the second measurement setup ID list field comprises one or more second measurement setup ID subfields, and each of the one or more second measurement setup ID subfields carries an ID of one sensing measurement setup.
48. The method of clause 47, wherein the quantity of the second measurement setup ID subfields comprised in the second measurement setup ID list field is indicated by the second number-of-measurement setups field.
49. The method of any one of clauses 45 to 48, wherein the sensing measurement setup termination request frame comprising the seventh indication subfield comprises:
   the sensing measurement setup termination request frame comprises a control field, and the control field comprises the seventh indication subfield.
50. The method of any one of clauses 45 to 49, wherein the reason for requesting to terminate the sensing measurement setup comprises at least one of:
   a sensing responder is in low power;
   the sensing responder has a lot of cached uplink data to transmit; or
   the sensing responder will start peer-to-peer (P2P) communication.
51. The method of any one of clauses 33 to 50, wherein a role of the third device is a sensing initiator or a sensing responder.
52. The method of clause 51, wherein the third device is an access point (AP) or a station (STA).
53. The method of any one of clauses 43 to 50, wherein receiving, by the third device, the fourth information frame comprises:
   receiving, by the third device, a sensing measurement setup termination request frame from a fourth device; and
   a role of the third device is a sensing initiator, and a role of the fourth device is a sensing responder.
54. The method of clause 53, wherein
   the third device is an AP and the fourth device is an STA; and the third device is not allowed to reject a sensing measurement setup termination request from the fourth device.
55. The method of clause 53, wherein
   the third device is an STA and the fourth device is an AP; and the third device can accept or reject a sensing measurement setup termination request from the fourth device.
56. The method of any one of clauses 43 to 50, or 53 to 55, wherein
   in a case where a sensing responder can initiate a termination of the sensing measurement setup by default, the fourth information frame is received by the third device before the third information frame is transmitted.
57. The method of any one of clauses 43 to 50, or 53 to 55, wherein
   in a case where a first sensing measurement setup is pre-set to have a termination initiated by a sensing responder, the fourth information frame is received by the third device before the third information frame is transmitted; wherein
   the first sensing measurement setup is a sensing measurement setup for which termination/rejection of termination is indicated by the third information frame.
58. The method of clause 57, wherein the first sensing measurement setup being pre-set to have the termination initiated by the sensing responder comprises:
   a sensing measurement setup request frame for establishing the first sensing measurement setup carries indication information indicating that the sensing responder is allowed to initiate a sensing measurement setup termination.
59. The method of clause 58, wherein the sensing measurement setup request frame for establishing the first sensing measurement setup carrying the indication information indicating that the sensing responder is allowed to initiate the sensing measurement setup termination comprises:
   the sensing measurement setup request frame for establishing the first sensing measurement setup comprises a subfield for indicating whether the sensing responder is allowed to initiate the sensing measurement setup termination; and
   the subfield for indicating whether the sensing responder is allowed to initiate the sensing measurement setup termination carries the indication information indicating that the sensing responder is allowed to initiate the sensing measurement setup termination.
60. A communication method, comprising:
   receiving, by a fifth device, a fifth information frame from a second station (STA), wherein the fifth information frame is used for requesting the fifth device to perform a sensing measurement as a proxy of the second STA.
61. The method of clause 60, wherein the fifth device is an access point (AP) device.
62. The method of clause 60 or 61, wherein the fifth information frame comprises a sensing by proxy (SBP) request frame, wherein the SBP request frame comprises at least one of:
   a measurement instance period subfield for carrying a measurement period to perform sensing by the first device as a proxy being requested;
   a measurement instance duration subfield for carrying a measurement duration to perform sensing by the first device as a proxy being requested;
   a channel state information (CSI)-based measurement result subfield for indicating whether a sensing measurement result type required for performing sensing by the first device as a proxy being requested is CSI information;
   a beam signal-to-noise ratio (SNR)-based measurement result subfield for indicating whether the sensing measurement result type required for performing sensing by the first device as a proxy being requested is beam SNR information;
   a number-of-responders field for indicating the quantity of sensing responders participating in a measurement setup and performing the sensing measurement;
   a responder information list present subfield for indicating whether the SBP request frame comprises a responder information list; or
   a responder information list field for carrying information of one or more sensing responders.
63. The method of clause 62, wherein the responder information list field comprises AID/UID subfields of one or more responders, and the AID/UID subfield of each of the responders carries an AID and/or UID of one sensing responder.
64. The method of clause 63, wherein the quantity of AID/UID subfields of the responders comprised in the responder information list field is indicated by the number-of-responders field.
65. The method of any one of clauses 60 to 64, further comprising:
   transmitting, by the fifth device, a sensing measurement setup request frame to another STA.
66. A communication method, comprising:
   receiving, by a second device, a first information frame, wherein the first information frame is used for allocating a first measurement setup ID.
67. The method of clause 66, wherein the first information frame comprises a sensing measurement setup request frame.
68. The method of clause 67, wherein
   the sensing measurement setup request frame is received from a first device by the second device;
   a role of the first device is a sensing initiator, and a role of the second device is a sensing responder; and
   the role of the first device and/or the role of the second device are determined during a sensing measurement setup.
69. The method of clause 68, wherein the role of the first device and/or the role of the second device are variable in a single sensing session.
70. The method of clause 67, wherein
   the first information frame is received from a first device by the second device;
   a role of the first device is a sensing initiator, and a role of the second device is a sensing responder; and
   the role of the first device and/or the role of the second device are determined during a sensing session setup.
71. The method of clause 70, wherein the role of the first device and/or the role of the second device are invariable in a single sensing session.
72. The method of clause 70 or 71, wherein the role of the first device and/or the role of the second device being determined during the sensing session setup comprises:
   in a case where an initial sensing session is terminated and a current sensing session is established, the role of the first device and/or the role of the second device are determined during a sensing session setup of the current sensing session, wherein the initial sensing session is a sensing session prior to the current sensing session.
73. The method of clause 72, wherein
   in the initial sensing session, the role of the first device is the sensing responder, and the role of the second device is the sensing initiator.
74. The method of any one of clauses 67 to 73, wherein the sensing measurement setup request frame comprises a first indication subfield and/or a first measurement setup ID subfield, wherein
   the first indication subfield indicates whether the sensing measurement setup request frame comprises the first measurement setup ID subfield; and
   the first measurement setup ID subfield carries the first measurement setup ID.
75. The method of clause 74, wherein the sensing measurement setup request frame further comprises:
   a subfield for carrying a medium access control (MAC) address of a first device; and/or.
   a subfield for carrying an association identifier (AID) and/or unassociation identifier (UID) of the first device.
76. The method of any one of clauses 67 to 75, wherein the sensing measurement setup request frame comprises a subfield for indicating whether a sensing responder is allowed to initiate a sensing measurement setup termination.
77. The method of any one of clauses 66 to 76, further comprising:
   transmitting, by the second device, a sensing measurement setup response frame.
78. The method of clause 77, wherein the sensing measurement setup response frame comprises a second indication subfield, wherein
   the second indication subfield carries indication information indicating that the sensing measurement setup response frame does not comprise a second measurement setup ID field.
79. The method of clause 66, wherein the first information frame comprises a sensing measurement setup response frame.
80. The method of clause 79, wherein
   the sensing measurement setup response frame is received from a first device by the second device;
   a role of the first device is a sensing responder, and a role of the second device is a sensing initiator; and
   the role of the first device and/or the role of the second device are determined during a sensing measurement setup.
81. The method of clause 80, wherein the role of the first device and/or the role of the second device are variable in a single sensing session.
82. The method of clause 79, wherein
   the sensing measurement setup response frame is received from a first device by the second device;
   a role of the first device is a sensing responder, and a role of the second device is a sensing initiator; and
   the role of the first device and/or the role of the second device are determined during a sensing session setup.
83. The method of clause 82, wherein the role of the first device and/or the role of the second device are invariable in a single sensing session.
84. The method of clause 82 or 83, wherein the role of the first device and/or the role of the second device being determined during the sensing session setup comprises:
   in a case where an initial sensing session is terminated and a current sensing session is established, the role of the first device and/or the role of the second device are determined during a sensing session setup of the current sensing session, wherein the initial sensing session is a sensing session prior to the current sensing session.
85. The method of clause 84, wherein
   in the initial sensing session, the role of the first device is the sensing initiator, and the role of the second device is the sensing responder.
86. The method of any one of clauses 79 to 85, wherein the sensing measurement setup response frame comprises a third indication subfield and/or a third measurement setup ID field, wherein
   the third indication subfield indicates whether the sensing measurement setup response frame comprises the third measurement setup ID field; and
   the third measurement setup ID field carries the first measurement setup ID.
87. The method of clause 86, wherein the sensing measurement setup response frame comprising the third indication subfield comprises:
   the sensing measurement setup response frame comprises a response control field, and the response control field comprises the third indication subfield.
88. The method of any one of clauses 79 to 87, further comprising:
   transmitting, by the second device, a sensing measurement setup request frame.
89. The method of clause 88, wherein the sensing measurement setup request frame comprises a fourth indication subfield, wherein
   the fourth indication subfield carries indication information indicating that the sensing measurement setup request frame does not comprise a fourth measurement setup ID field.
90. The method of any one of clauses 66 to 89, wherein the second device is an access point (AP) or a station (STA).
91. The method of any one of clauses 66 to 90, further comprising:
   identifying uniquely, by the second device, a measurement setup by using the first measurement setup ID.
92. The method of any one of clauses 68 to 69, further comprising:
   identifying uniquely, by the second device, a measurement setup by using the first measurement setup ID and information of the first device, wherein the information of the first device comprises at least one of a MAC address, an AID, or a UID of the first device.
93. The method of clause 92, wherein the information of the first device is carried in a subfield for carrying the MAC address of the first device and/or a subfield for carrying the AID and/or UID of the first device in the sensing measurement setup request frame.
94. A communication method, comprising:
   receiving, by a fourth device, a third information frame, wherein the third information frame indicates to terminate a sensing measurement setup or to reject to terminate the sensing measurement setup.
95. The method of clause 94, wherein the third information frame comprises a sensing measurement setup termination frame.
96. The method of clause 95, wherein the sensing measurement setup termination frame comprises at least one of:
   a fifth indication subfield for indicating whether the sensing measurement setup termination frame comprises a command code subfield;
   a sixth indication subfield for indicating whether the sensing measurement setup termination frame comprises a first reason code field;
   the command code subfield for indicating to terminate the sensing measurement setup or to reject to terminate the sensing measurement setup; or
   the first reason code field for carrying information of a reason for terminating the sensing measurement setup.
97. The method of clause 96, wherein the sensing measurement setup termination frame further comprises at least one of:
   a first number-of-measurement setups field for indicating the quantity of the sensing measurement setups to be terminated; or
   a first measurement setup ID list field for carrying IDs of one or more sensing measurement setups.
98. The method of clause 97, wherein the first measurement setup ID list field comprises one or more first measurement setup ID subfields, and each of the one or more first measurement setup ID subfields carries an ID of one sensing measurement setup.
99. The method of clause 98, wherein the quantity of the first measurement setup ID subfields comprised in the first measurement setup ID list field is indicated by the first number-of-measurement setups field.
100. The method of any one of clauses 96 to 99, wherein the sensing measurement setup termination frame comprising the fifth indication subfield, the command code subfield, and/or the sixth indication subfield comprises:
   the sensing measurement setup termination frame comprises a command-and-reason code control field, and the command-and-reason code control field comprises the fifth indication subfield and/or the sixth indication subfield.
101. The method of any one of clauses 96 to 100, wherein the reason for terminating the sensing measurement setup comprises at least one of:
   an upper-layer application indicates to terminate the sensing measurement setup; or
   a sensing responder requests to terminate the sensing measurement setup.
102. The method of any one of clauses 94 to 101, wherein in a case where the third information frame indicates to terminate the sensing measurement setup, the method further comprises:
   terminating, by the fourth device, an acknowledgement message.
103. The method of any one of clauses 94 to 102, further comprising:
   terminating, by the fourth device, a fourth information frame, wherein the fourth information frame is used for requesting to terminate the sensing measurement setup.
104. The method of clause 103, wherein the fourth information frame comprises a sensing measurement setup termination request frame.
105. The method of clause 104, wherein the sensing measurement setup termination request frame comprises at least one of:
   a seventh indication subfield for indicating whether the sensing measurement setup termination request frame comprises a second reason code field; or
   the second reason code field for carrying information of a reason for requesting to terminate the sensing measurement setup.
106. The method of clause 105, wherein the sensing measurement setup termination request frame further comprises at least one of:
   a second number-of-measurement setups field for indicating the quantity of the sensing measurement setups requested to be terminated; or
   a second measurement setup ID list field for carrying IDs of one or more sensing measurement setups.
107. The method of clause 106, wherein the second measurement setup ID list field comprises one or more second measurement setup ID subfields, and each of the one or more second measurement setup ID subfields carries an ID of one sensing measurement setup.
108. The method of clause 107, wherein the quantity of the second measurement setup ID subfields comprised in the second measurement setup ID list field is indicated by the second number-of-measurement setups field.
109. The method of any one of clauses 105 to 108, wherein the sensing measurement setup termination request frame comprising the seventh indication subfield comprises:
   the sensing measurement setup termination request frame comprises a control field, and the control field comprises the seventh indication subfield.
110. The method of any one of clauses 105 to 109, wherein the reason for requesting to terminate the sensing measurement setup comprises at least one of:
   a sensing responder is in low power;
   the sensing responder has a lot of cached uplink data to transmit; or
   the sensing responder will start peer-to-peer (P2P) communication.
111. The method of any one of clauses 94 to 110, wherein a role of the fourth device is a sensing responder or a sensing initiator.
112. The method of clause 111, wherein the fourth device is an access point (AP) or a station (STA).
113. The method of any one of clauses 103 to 110, wherein transmitting, by the fourth device, the fourth information frame comprises:
   transmitting, by the fourth device, a sensing measurement setup termination request frame to a third device; and
   a role of the third device is a sensing initiator, and a role of the fourth device is a sensing responder.
114. The method of clause 113, wherein
   the third device is an AP and the fourth device is an STA; and a sensing measurement setup termination request from the fourth device is not allowed to be rejected.
115. The method of clause 113, wherein
   the third device is an STA and the fourth device is an AP; and a sensing measurement setup termination request from the fourth device may be accepted or rejected.
116. The method of any one of clauses 103 to 110, or 113 to 115, wherein
   in a case where a sensing responder can initiate a termination of the sensing measurement setup by default, the fourth information frame is transmitted by the fourth device before the third information frame is received.
117. The method of any one of clauses 103 to 110, or 113 to 115, wherein
   in a case where a first sensing measurement setup is pre-set to have a termination initiated by a sensing responder, the fourth information frame is transmitted by the fourth device before the third information frame is received; wherein
   the first sensing measurement setup is a sensing measurement setup for which termination/rejection of termination is indicated by the third information frame.
118. The method of clause 117, wherein the first sensing measurement setup being pre-set to have the termination initiated by the sensing responder comprises:
   a sensing measurement setup request frame for establishing the first sensing measurement setup carries indication information indicating that the sensing responder is allowed to initiate a sensing measurement setup termination.
119. The method of clause 118, wherein the sensing measurement setup request frame for establishing the first sensing measurement setup carrying the indication information indicating that the sensing responder is allowed to initiate the sensing measurement setup termination comprises:
   the sensing measurement setup request frame for establishing the first sensing measurement setup comprises a subfield for indicating whether the sensing responder is allowed to initiate the sensing measurement setup termination; and
   the subfield for indicating whether the sensing responder is allowed to initiate the sensing measurement setup termination carries the indication information indicating that the sensing responder is allowed to initiate the sensing measurement setup termination.
120. A communication method, comprising:
   transmitting, by a second station (STA), a fifth information frame to a fifth device, wherein the fifth information frame is used for requesting the fifth device to perform a sensing measurement as a proxy of the second STA.
121. The method of clause 120, wherein the fifth device is an access point (AP) device.
122. The method of clause 120 or 121, wherein the fifth information frame comprises a sensing by proxy (SBP) request frame, wherein the SBP request frame comprises at least one of:
   a measurement instance period subfield for carrying a measurement period to perform sensing by the first device as a proxy being requested;
   a measurement instance duration subfield for carrying a measurement duration to perform sensing by the first device as a proxy being requested;
   a channel state information (CSI)-based measurement result subfield for indicating whether a sensing measurement result type required for performing sensing by the first device as a proxy being requested is CSI information;
   a beam signal-to-noise ratio (SNR)-based measurement result subfield for indicating whether the sensing measurement result type required for performing sensing by the first device as a proxy being requested is beam SNR information;
   a number-of-responders field for indicating the quantity of sensing responders participating in a measurement setup and performing the sensing measurement;
   a responder information list present subfield for indicating whether the SBP request frame comprises a responder information list; or
   a responder information list field for carrying information of one or more sensing responders.
123. The method of clause 122, wherein the responder information list field comprises AID/UID subfields of one or more responders, and the AID/UID subfield of each of the responders carries one AID and/or UID of the sensing responder.
124. The method of clause 123, wherein the quantity of AID/UID subfields of the responders comprised in the responder information list field is indicated by the number-of-responders field.
125. A communication device, comprising:
   a first transmitting module, configured to transmit a first information frame, wherein the first information frame is used for allocating a first measurement setup ID.
126. A communication device, comprising:
   a second transmitting module, configured to transmit a third information frame, wherein the third information frame indicates to terminate a sensing measurement setup or to reject to terminate the sensing measurement setup.
127. A communication device, comprising:
   a fifth receiving module, configured to receive a fifth information frame from a second STA, wherein the fifth information frame is used for requesting the communication device to perform a sensing measurement as a proxy of the second STA.
128. A communication device, comprising:
   a sixth receiving module, configured to receive a first information frame, wherein the first information frame is used for allocating a first measurement setup ID.
129. A communication device, comprising:
   a seventh receiving module, configured to receive a third information frame, wherein the third information frame indicates to terminate a sensing measurement setup or to reject to terminate the sensing measurement setup.
130. A communication device, comprising:
   a seventh transmitting module, configured to transmit a fifth information frame to a fifth device, wherein the fifth information frame is used for requesting the fifth device to perform a sensing measurement as a proxy of the second STA.
131. A communication device, comprising:
   a memory configured to store computer programs; and
   a processor configured to invoke and execute the computer programs stored in the memory, to perform the method of any of clauses 1 to 32, 33 to 59, 60 to 65, 66 to 93, 94 to 119, or 120 to 124.
132. A chip comprising:
   a processor configured to invoke and execute computer programs stored in a memory, to cause a device equipped with the chip to perform the method of any of clauses 1 to 32, 33 to 59, 60 to 65, 66 to 93, 94 to 119, or 120 to 124.
133. A computer-readable storage medium configured to store computer programs that are operable with a computer to perform the method of any of clauses 1 to 32, 33 to 59, 60 to 65, 66 to 93, 94 to 119, or 120 to 124.
134. A computer program product comprising computer program instructions that are operable with a computer to perform the method of any of clauses 1 to 32, 33 to 59, 60 to 65, 66 to 93, 94 to 119, or 120 to 124.
135. A computer program being operable with a computer to perform the method of any of clauses 1 to 32, 33 to 59, 60 to 65, 66 to 93, 94 to 119, or 120 to 124

The foregoing elaborations are merely implementations of the present disclosure, but are not intended to limit the protection scope of the present disclosure. Any variation or replacement easily thought of by those skilled in the art within the technical scope disclosed in the present disclosure shall belong to the protection scope of the present disclosure. Therefore, the protection scope of the present disclosure shall be subject to the protection scope of the claims.

## Claims

1. A communication method, comprising:
transmitting, by a first device to a second device, a first information frame, wherein the first information frame is used for allocating a first measurement setup ID;
wherein the first measurement setup ID and information of the first device are to be used by the second device to uniquely identify a measurement setup, and the information of the first device comprises at least one of a medium access control, MAC, address, an association identifier, AID, or an unassociation identifier, UID of the first device.

2. The method of claim 1, wherein a tuple <Initiator MAC Address/AID/UID, Measurement Setup ID> is used to identify one measurement setup.

3. The method of claim 2, wherein the tuple <Initiator MAC Address/AID/UID, Measurement Setup ID> is used to avoid Measurement Setup ID conflict.

4. The method of claim 3, wherein Measurement Setup ID conflict is caused by a third device set with a same Measurement Setup ID as the second device.

5. The method of claim 1, wherein the first information frame comprises a sensing measurement setup request frame.

6. The method of claim 5, wherein
the sensing measurement setup request frame is transmitted to the second device by the first device;
a role of the first device is a sensing initiator, and a role of the second device is a sensing responder; and
the role of the first device and/or the role of the second device are determined during a sensing measurement setup.

7. The method of claim 1, wherein the information of the first device is carried in a subfield for carrying the MAC address of the first device and/or a subfield for carrying the AID and/or UID of the first device in a sensing measurement setup request frame.

8. A communication method, comprising:
receiving, by a second device from a first device, a first information frame, wherein the first information frame is used for allocating a first measurement setup ID;
wherein the first measurement setup ID and information of the first device are to be used by the second device to uniquely identify a measurement setup, and the information of the first device comprises at least one of a medium access control, MAC, address, an association identifier, AID, or an unassociation identifier, UID of the first device.

9. The method of claim 8, wherein a tuple <Initiator MAC Address/AID/UID, Measurement Setup ID> is used to identify one measurement setup.

10. The method of claim 9, wherein the tuple <Initiator MAC Address/AID/UID, Measurement Setup ID> is used to avoid Measurement Setup ID conflict.

11. The method of claim 10, wherein Measurement Setup ID conflict is caused by a third device set with a same Measurement Setup ID as the second device.

12. The method of claim 8, wherein the first information frame comprises a sensing measurement setup request frame.

13. The method of claim 12, wherein
the sensing measurement setup request frame is received from the first device by the second device;
a role of the first device is a sensing initiator, and a role of the second device is a sensing responder; and
the role of the first device and/or the role of the second device are determined during a sensing measurement setup.

14. The method of claim 8, wherein the information of the first device is carried in a subfield for carrying the MAC address of the first device and/or a subfield for carrying the AID and/or UID of the first device in a sensing measurement setup request frame.

15. A communication device, comprising:
a memory configured to store computer programs; and
a processor configured to invoke and execute the computer programs stored in the memory, to perform the method of any of claims 1 to 7, or 8 to 14.
